(19) **Europäisches Patentamt / European Patent Office / Office européen des brevets**

(11) **EP 3 110 203 B1**

(12) **FASCICULE DE BREVET EUROPEEN**

(45) Date de publication et mention de la délivrance du brevet:
**26.08.2020 Bulletin 2020/35**

(51) Int Cl.:
*H04W 36/00* *(2009.01)* *H04W 36/32* *(2009.01)*

(21) Numéro de dépôt: **16175670.5**

(22) Date de dépôt: **22.06.2016**

(54) **MESURE DE PUISSANCE DANS UN DISPOSITIF DE COMMUNICATION PRENNANT COMPTE DE L'EFFET DOPPLER**

DOPPLER EFFEKT BERÜCKSICHTIGENDES LEISTUNGSMESSVERFAHREN UND -VORRICHTUNG

MEASURING POWER IN A COMMUNICATION DEVICE TAKING ACOUNT OF DOPPLER EFFECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2015 FR 1501298**

(43) Date de publication de la demande:
**28.12.2016 Bulletin 2016/52**

(73) Titulaire: **THALES**
**92400 Courbevoie (FR)**

(72) Inventeurs:
• **PANAITOPOL, Dorin**
**92622 Gennevilliers Cedex (FR)**
• **ICART, Isabelle**
**92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 2 242 312      WO-A1-2012/171194**
**US-A1- 2005 020 203      US-A1- 2006 223 559**
**US-A1- 2013 196 670**

**Description**

L'invention concerne un procédé et une unité mobile UE pour mesurer la puissance émise par une ou plusieurs stations de base dans un réseau de communication et notamment en amont de l'étape de transfert ou de changement de cellule de communication, plus connue sous le terme anglo-saxon « Handover » pour des dispositifs mobiles se déplaçant dans un réseau de communication.

Elle peut être utilisée, par exemple, pour des communications en technologie LTE (connue sous l'expression anglo-saxonne Long Term Evolution) pour des avions, pour des trains à grande vitesse ou d'autres plateformes de communication se déplaçant très rapidement ou dans d'autres systèmes quelque soit la technologie mobile utilisée, par exemple la technologie 2G ou 3G. L'équipement mobile pourra être un utilisateur situé au sein d'un avion ou d'un autre porteur, ou encore un équipement disposé sur l'extérieur de l'avion et en communication avec un ou plusieurs utilisateurs.

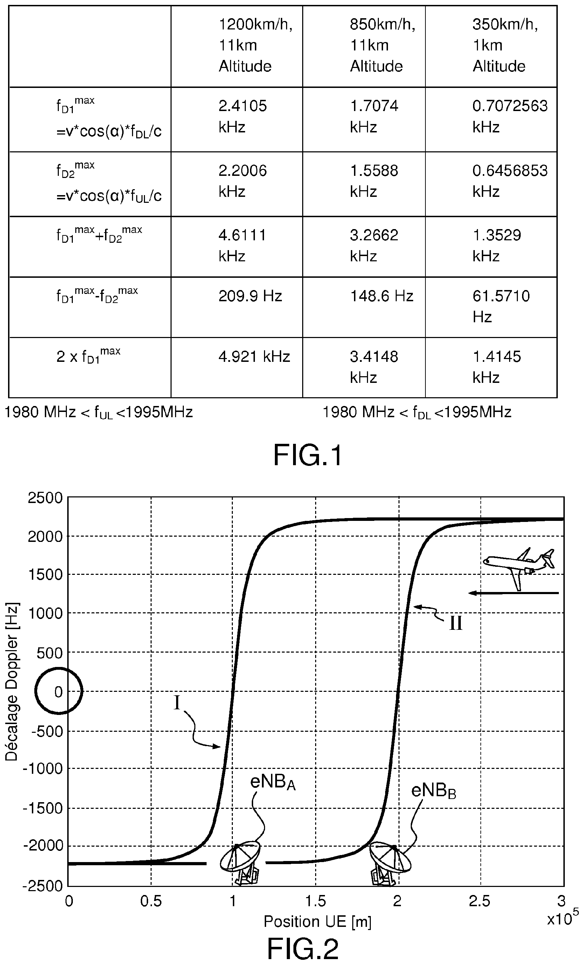

Un équipement mobile LTE placé à bord d'un aéronef, un avion par exemple, doit pouvoir communiquer avec des stations de base LTE situées au sol. Ces dernières contrôlent la communication et fournissent un moyen de connexion au cœur de réseau LTE. Le transfert du flux de données entre les passagers et l'équipement mobile UE est notamment assuré au moyen d'un réseau interne à l'avion, par exemple un réseau WiFi. Lorsque l'aéronef se déplace avec une très grande vitesse, les signaux reçus/transmis par l'équipement mobile depuis/vers une station de base sont affectés par des décalages Doppler très nettement supérieurs à ce que peut tolérer le standard LTE, soit environ 900 Hz. Si le décalage Doppler est corrigé par rapport à la station de base de desserte à laquelle est rattaché l'équipement mobile, ce dernier ne pourra pas bien mesurer le signal reçu depuis les stations de base voisines, car les signaux de référence utilisés pour cette mesure sont affectés d'un décalage Doppler relatif trop important. La station de base de desserte, qui se base sur ces mesures pour le choix de la nouvelle cellule cible en vue d'un changement de cellule ou « Handover », ne pourra donc pas prendre la bonne décision de changement de cellule d'affectation au bon moment et la qualité de service risque d'être dégradée. Ceci peut se traduire par une coupure de communication plus ou moins longue. Le tableau de la figure 1 présente quelques exemples de décalage Doppler, où c est la vitesse de la lumière, v est la vitesse de l'équipement mobile et a l'angle entre la direction du vecteur vitesse de l'équipement mobile et l'axe équipement mobile-cellule de base de desserte avec les hypothèses suivantes :

- Une largeur de 100 kms entre deux cellules,
- Une fréquence descendante $f_{DL}$ ou fréquence de la liaison aller, également connue sous les termes anglo-saxons de « downlink » et « Forward Link », de 2182 MHz, dans la bande de fréquence 2170-2185 MHz,
- Une fréquence montante $f_{UL}$ ou fréquence de liaison de retour, également connue sous l'abréviation anglo-saxonne « Uplink » et « Reverse Link », de 1992,5 MHz, dans la bande 1980-1995 MHz, ce qui conduit à des valeurs différentes pour $f_{D1}{}^{max}$ et $f_{D2}{}^{max}$.

Dans le document intitulé « Analytical Link Performance Evaluation of LTE Downlink with Carrier Frequency Offset" de QI Wang and Markus Rupp, ASILOMAR 2011, on montre qu'un décalage de fréquence porteuse de 1,5 KHz, soit 10% de la valeur de l'espace inter-sous-porteuses prévu dans LTE, peut réduire le rapport signal sur bruit plus interférence, ou SINR, de plus de 30 dB. La puissance reçue à partir de la station de base de desserte ou d'une station de base voisine et mesurée au niveau d'un équipement mobile peut donc être inexacte si le décalage ou l'étalement Doppler relatif à la cellule de desserte n'est pas corrigé, ce qui justifie la nécessité de trouver de nouvelles solutions. Ce document montre les effets du décalage fréquentiel mais n'offre pas de solution pour pré-compenser l'effet Doppler.

Le brevet EP 2360967 divulgue un procédé dans lequel la consigne de compensation de décalage Doppler liaison montante UU liaison descendante DL est calculée durant la communication grâce à la connaissance de la position et de la vitesse de l'équipement mobile et de la position de la station de base de desserte. Le changement de cellule est géré par une méthode qui calcule, à partir de la position de l'équipement mobile, de la position des différentes stations dans le voisinage, et d'un modèle de propagation, la puissance qui devrait être théoriquement reçue par l'équipement mobile de la part des cellules voisines. Le rapport de mesures ainsi calculé est envoyé vers la station de base en lieu et place du rapport de mesures réalisé par la pile de l'équipement mobile sur le signal radio descendant. La solution décrite se base sur une estimation du niveau de signal reçu de la part d'une ou de plusieurs cellules voisines utilisant une base de données de stations de base et des informations de position fournies par un dispositif de localisation GPS, ou satellite, et d'un modèle de propagation (par exemple, propagation en espace libre). Le niveau de signal estimé n'est pas représentatif de la réalité et ne tient notamment pas compte de phénomènes liés à l'environnement, tels que le masquage des signaux par des obstacles, les multi-trajets, etc.

Il est connu d'utiliser des signaux CRS (Cell-Specific Reference Signal) transmis en voie descendante (de la station de base eNB vers l'unité mobile UE) en LTE pour effectuer des mesures sur des cellules voisines (et/ou la cellule de desserte), sur une fréquence différente ou sur la même fréquence que celle de la cellule de desserte.

La demande de brevet US2006223559 décrit un système permettant de mesurer une valeur de rapport signal à bruit pour un système de type CDMA.

La demande de brevet US20130196670 divulgue un procédé et un système pour déterminer une densité spectrale de puissance à partir d'une fréquence porteuse.

La demande de brevet US 2005/020203 décrit un système de communication qui choisit les pilotes en fonction de son mode de fonctionnement. Le système comporte également un répéteur à grande vitesse capable de fournir une liaison de communication entre la station mobile et un réseau d'accès radio desservant la station mobile.

La demande de brevet EP 2242312 décrit un procédé de communication radio mobile dans lequel une station mobile se déplace entre plusieurs stations de base à grande vitesse.

La demande de brevet WO 2012/171194 décrit une méthode de Handover pour des dispositifs mobiles se déplaçant à des vitesses élevées.

Dans la suite de la description, une « cellule de base voisine » à la cellule de desserte est une cellule de base qui se trouve dans le voisinage de la cellule de base de desserte au sens connu de l'homme du métier dans le domaine technique. La cellule de base de desserte connaît les cellules dans son voisinage proche ou lointain et avant la procédure de Handover, elle peut envoyer à un équipement mobile UE une liste indiquant les cellules voisines, ce qui simplifie la procédure de handover, bien que cela ne soit pas forcément nécessaire. Les mesures faites par l'équipement mobile sont utilisées pour la décision de Handover réalisée par la station de desserte, d'où l'intérêt pour la station de base de desserte de bien connaître ses voisins.

Le sigle CRS désigne des « signaux de référence spécifiques à une cellule ou à une station de base ».

Les lettres «UE» désignent, dans le contexte de la présente invention, par exemple un équipement qui est monté sur un support mobile ou en anglo-saxon « User Equipment » et qui représente aussi par abus de langage l'équipement mobile ou l'utilisateur mobile. Dans le contexte de la description, l'équipement mobile se déplace à très grande vitesse, supérieure ou proche de la valeur de vitesse tolérée par la norme LTE dans la bande de fréquence considérée. D'une manière similaire, l'acronyme eNB (eNodeB) désigne une station de base. La voie montante désigne une communication de l'équipement mobile vers la station de base, et la voie descendante une communication de la station de base vers l'équipement mobile au bord de l'avion ou sur l'extérieur de l'avion.

Le mot « Doppler » englobe dans cette description « l'étalement Doppler » ou bien le « décalage Doppler ». En général, par effet Doppler, on désigne le décalage de fréquence d'une onde (mécanique, acoustique, électromagnétique, etc.) entre la mesure à l'émission et la mesure à la réception, lorsque la distance entre un émetteur et un récepteur varie au cours du temps. En télécommunication, on considère que les signaux voyageant le long de chemins ou de parcours différents peuvent avoir des décalages Doppler différents, correspondant à des vitesses de changement en phase. L'étalement Doppler est représenté par l'écart maximal entre les fréquences générées par l'effet Doppler. En d'autres mots, la différence (maximale) de décalages Doppler entre les différentes composantes de signaux qui contribuent à un seul trajet est connue comme étalement Doppler. Dans le cas d'un canal air-sol A2G, on a en général un seul trajet principal, car un aéronef se trouve en vue directe ou LOS (Line-Of-Sight) de la station de base, et c'est le décalage Doppler qui prédomine.

L'objet de la présente invention concerne un procédé selon la revendication 1 et une unité mobile UE selon la revendication 13 permettant de déterminer une valeur de puissance d'un signal reçu depuis chacune des cellules voisines à une cellule de desserte tout en restant connecté à cette dernière. La mise en œuvre du procédé repose notamment sur l'utilisation des signaux CRS transmis en voie descendante de la station de base eNB vers l'équipement mobile, avec une compensation Doppler adéquate pour permettre à la pile protocolaire d'un équipement mobile de mesurer le niveau du signal reçu depuis chaque cellule voisine avec une précision optimale.

L'invention concerne un procédé pour estimer la puissance d'une cellule dans un système de communication utilisant la technologie LTE comportant au moins une station de desserte et une ou plusieurs stations voisines eNB, une ou plusieurs unités de communication mobiles UE, une unité de communication se déplaçant avec une vitesse élevée et étant en communication à un instant à la station de desserte, comportant au moins les étapes suivantes :

- Pour un signal reçu $r_1$ composé d'un signal $r(eNB_1)$ émis par une cellule de desserte $eNB_1$ et d'un signal $r(eNB_2)$ émis par au moins une cellule voisine $eNB_2$,
- Transmettre le signal $r_1$ à une unité de compensation et appliquer une première valeur de consigne de compensation correspondant au décalage Doppler sur le signal émis par la cellule de desserte, un deuxième signal $r_2$, $R_2$ issu de l'unité de compensation est constitué d'un premier signal compensé $r(eNB_1)comp$, et au moins du signal $r(eNB_2)comp$ réceptionné depuis au moins la cellule voisine $eNB_2$,
- Transmettre le deuxième signal $r_2$, $R_2$ à :

  ◦ Un premier module de combinaison de signaux qui reçoit le deuxième signal $r_2$, $R_2$ et une première séquence $c^*(eNB_1)$, $C^*(eNB_1)$, de signaux de référence spécifique à la cellule de desserte,
  ◦ Au moins un deuxième module de combinaison de signaux qui reçoit le deuxième signal $r_2$, $R_2$, et une deuxième séquence $c^*(eNB_2)comp$, $C^*(eNB_2)comp$ de signaux de référence issus d'une unité de compensation de signaux de référence,

- Déterminer une première valeur de puissance $P_1(eNB_1)$ correspondant au premier signal $M_1(r_2, c^*(eNB_1))$, $M_1(R_2, C^*(eNB_1))$ issu du premier module de combinaison de signaux correspondant à la cellule de base de desserte,

Le procédé est caractérisé en ce que :
On applique simultanément une valeur de consigne pour la correction de l'offset fréquentiel sur les signaux de référence spécifiques d'une cellule voisine de la cellule de desserte :
Avant que la correction de la cellule de desserte soit faite :

$$+fd_{DL,N} = +\frac{v.F_{DL}}{c}.cos(\alpha')$$

Après que la correction de la cellule de desserte soit faite:

$$-fd_{DL,S} + fd_{DL,N} = -\frac{v.F_{DL}}{c}.cos(\alpha) + \frac{v.F_{DL}}{c}.cos(\alpha')$$

$v$: le module du vecteur vitesse de l'UE, $F_{DL}$ la fréquence porteuse en voie descendante,
$\alpha$: l'angle entre la direction de déplacement de l'UE et la direction du vecteur unitaire directeur de l'axe équipement mobile UE-cellule de desserte S,
$\alpha'$ : l'angle entre le vecteur unitaire $\vec{v}$ et la direction du vecteur unitaire directeur de l'axe UE-cellule voisine N, noté $\vec{u}$

- Déterminer une deuxième valeur de puissance $P_2(eNB_2)$ correspondant au deuxième signal $M_2(r_2, c^*(eNB_2)comp)$, $M_2(R_2, C^*(eNB_2)comp)$ issu du deuxième module de combinaison de signaux correspondant à au moins une cellule voisine,
- Comparer la première valeur de puissance à au moins la deuxième valeur de puissance et sélectionner la meilleure cellule voisine pour une procédure de Handover et/ou décider d'une étape de Handover.

Selon une variante de réalisation, le premier module de combinaison de signaux et le deuxième module de combinaison de signaux sont un corrélateur et/ou un multiplicateur de signaux.

L'étape de comparaison des valeurs des puissances est réalisée au niveau de la station de base ou par exemple transmise à une station de base qui décide de déclencher ou non le handover.

Selon une variante de réalisation, on génère les signaux de référence spécifiques pour une cellule voisine et on corrige l'effet Doppler sur ces signaux au niveau de la pile protocolaire de l'équipement mobile.

Selon une autre variante de réalisation, on génère les signaux de référence spécifiques pour une cellule voisine, un troisième bloc de multiplexage ou de corrélation reçoit le signal $r_2$ et une séquence de signaux CRS générée par le module externe et compensée, le mélange $M_3(r_2, c^*(eNB_2)comp)$ est transmis à un module d'estimation de puissance, la valeur de puissance $P_3(eNB_2)$ est calculée et envoyée vers la couche RRC du mobile et on corrige l'effet Doppler au niveau d'une unité de génération de signaux CRS externe à la pile protocolaire de l'unité mobile, et on conserve le signal issu de l'unité de génération externe lorsqu'il existe un signal issu de la pile protocolaire de l'équipement mobile.

Pour déterminer les consignes de compensation Doppler pour une cellule de desserte S avec laquelle l'UE communique le procédé exécute, par exemple, les étapes suivantes :

∘ Les consignes à appliquer en voie UL et DL sont notées respectivement $-fd_{UL,S}$ et $-fd_{DL,S}$,
∘ Les décalages Doppler subis par le signal en voie montante et descendante, respectivement sont :

$$\circ \; fd_{UL,S} = \frac{v.F_{UL}}{c}.cos(\alpha) \; \text{et} \; fd_{DL,S} = \frac{v.F_{DL}}{c}.cos(\alpha) \; ,$$

les consignes $-fd_{UL,S}$ et $-fd_{DL,S}$ permettant de compenser ces décalages.

Le décalage fréquentiel à appliquer aux signaux CRS générés localement avant de mesurer la puissance d'une cellule voisine N est déterminé, par exemple, de la manière suivante :

o Le décalage Doppler par rapport à la cellule voisine notée $fd_{DL,N}$ est calculé de la manière suivante :

- $fd_{DL,N\_plus\_probable} = \frac{v.F_{DL\_cellule\_N\_plus\_probable}}{c}.cos(\alpha'cellule\_plus\_probable)$ , où $\alpha'$ cellule_plus_probable est l'angle entre le vecteur unitaire $\vec{v}$ et la direction du vecteur unitaire directeur de l'axe UE-cellule voisine N le plus probable à être utilisée pour le handover dans la direction de déplacement en ayant un meilleur signal reçu ou alternativement le Doppler relatif maximal par rapport à la cellule de desserte,

$$fd_{DL,N} = \frac{v.F_{DL}}{c},$$ où on fixe comme cellule cible pour le HO une cellule lointaine dans la direction de déplacement visible ou mesurable.

Le calcul de la puissance prend, par exemple, en compte le signal $r_2$, $R_2$ reçu décalé temporellement sur la durée d'un symbole dans un intervalle de temps défini par le nombre des échantillons par préfixe cyclique et le nombre des échantillons par symbole utile.

Selon une variante de réalisation, le calcul de la valeur de la puissance utilise une corrélation du signal reçu en domaine temporel avec un modèle généré à partir d'une séquence CRS connue en avance par le récepteur de l'équipement mobile UE, et localement généré par le récepteur d'un équipement mobile, avec une structure OFDM spécifique LTE contenant seulement des pilotes sans des données utiles pour utilisateur, et avec la formule :

$$\hat{P}_{eNB2} = \max_{0 \le \tau \le N_{FFT}+N_{CP}-1} \left( \left| \frac{1}{N} \sum_{n=0}^{N-1} r_2[n+\tau] \cdot c_{eNB2,comp}^*[n] \right| \right)^2$$

Le calcul de la puissance peut être effectuée après une opération de transformée de Fourier FFT coté récepteur de l'équipement, grâce à l'équation suivante :

$$\hat{P}_{eNB2} = \left| \frac{1}{N_{RS}} \sum_{n=0}^{N_{RS}-1} R_2[n] \cdot C_{eNB2,comp}^*[n] \right|^2$$

où $\hat{P}_{eNB2}$ est la puissance estimée, $R_2[n]$ est le signal reçu (après une opération de transformée de Fourier FFT du coté récepteur) et la récupération des positions relatives au pilotes et $C_{eNB2,comp}^*[n]$ sont les valeurs complexes conjuguées de la séquence CRS, séquence qui a été localement régénérée et compensée par l'UE en fonction du Doppler relatif, et qui correspond aux pilotes non-conjugués transmis $C_{eNB2}[n]$ par la station de base.

Les décalages Doppler à appliquer seront calculés en utilisant des informations de position données par un système GPS.

Selon une variante de réalisation, les signaux utilisés dans le système comportent des séquences de synchronisation PSS/SSS et en ce que les décalages Doppler à appliquer sont déduites de ces signaux PSS/SSS.

Le procédé selon l'invention peut être mis en œuvre dans un système de communication utilisant les technologies LTE 3GPP.

L'invention concerne aussi un système permettant de mesurer la puissance d'une cellule de desserte dans un système de communication comportant au moins une ou plusieurs stations eNB, une ou plusieurs unités de communication mobiles, une unité de communication se déplaçant avec une vitesse élevée, une station de desserte et/ou une station voisine caractérisé en ce que l'unité mobile UE comporte au moins les éléments suivants :

• Un émetteur/récepteur RF,
• une unité de compensation Doppler en réception - voie DownLink (DL) - depuis la cellule de desserte vers le UE,
• Une unité de gestion de la mobilité adaptée à déterminer les valeurs des consignes de décalage Doppler, et à déterminer simultanément et avant la mesure de puissance une valeur de consigne pour la correction de l'offset fréquentiel sur les signaux de référence spécifiques d'une cellule voisine de la cellule de desserte :
Avant que la correction de la cellule de desserte soit faite :

$$+fd_{DL,N} = +\frac{v.F_{DL}}{c} \cdot cos(\alpha')$$

Après que la correction de la cellule de desserte soit faite:

$$-fd_{DL,S} + fd_{DL,N} = -\frac{v.F_{DL}}{c} \cdot cos(\alpha) + \frac{v.F_{DL}}{c} \cdot cos(\alpha')$$

$v$: le module du vecteur vitesse de l'UE, $F_{DL}$ la fréquence porteuse en voie descendante,

$\alpha$: l'angle entre la direction de déplacement de l'UE et la direction du vecteur unitaire directeur de l'axe équipement mobile UE-cellule de desserte S,

$\alpha'$ : l'angle entre le vecteur unitaire $v'$ et la direction du vecteur unitaire directeur de l'axe UE-cellule voisine N,

noté $\overrightarrow{u'}$ ,

- Un module de génération de signaux CRS pour la cellule de desserte et pour une (ou plusieurs) cellule(s) voisine(s),
- Une unité d'estimation de puissance d'une cellule adaptée à recevoir un premier signal correspondant à un signal mixé comprenant le signal reçu au niveau du récepteur de l'unité mobile corrigé pour la partie cellule de desserte de l'effet Doppler et d'une séquence de signaux CRS et au moins un deuxième signal correspondant au mélange du signal reçu par le récepteur de l'unité mobile mixé avec une deuxième séquence de signaux CRS corrigé par l'effet Doppler pour (au moins) une cellule voisine.

Le système peut comprendre un module externe de génération de signaux CRS compensées, un mélangeur recevant le signal mesuré comprenant le signal compensé de la cellule de desserte et le signal non compensé de la cellule voisine, et une séquence de signaux CRS générée par ledit module externe pour la cellule voisine.

Le système peut aussi comporter un dispositif GPS fournissant la position, et/ou les coordonnées, et/ou des informations de vitesse de l'équipement mobile et en relation avec l'unité de gestion mobile pour déterminer les valeurs des consignes à appliquer.

Le système comporte une base de données contenant des informations relatives au déploiement du réseau de communication et en liaison avec l'unité de gestion de la mobilité.

D'autres caractéristiques et avantages de la présente invention apparaîtront mieux à la lecture de la description qui suit d'exemples donnés à titre illustratif et nullement limitatif, annexée des figures qui représentent :

- La figure 1, un exemple de tableau de décalages Doppler,
- Les figures 2 et 3, une représentation du décalage Doppler et de sa correction,
- La figure 4, une représentation du passage d'une première cellule de communication à une deuxième cellule de communication,
- La figure 5, une illustration des notations utilisées pour le calcul de compensation Doppler,
- La figure 6A, une première variante de réalisation du procédé selon l'invention dans le domaine temporel, la figure 6B, une autre variante dans le domaine temporel et la figure 6C une variante dans le domaine fréquentiel,
- Les figures 7 à 10, différents exemples de pile protocolaire,
- La figure 11, une représentation des échanges de messages, et
- La figure 12A, une deuxième variante de réalisation dans le domaine temporel, la figure 12B une autre variante dans le domaine temporel et la figure 12C une deuxième variante dans le domaine fréquentiel.

La figure 2 représente le déplacement en vol pour un avion, ainsi que le décalage Doppler courbe I, courbe II, par rapport à deux stations de base eNB$_A$, eNB$_B$, en fonction de la position d'un équipement mobile UE (User Equipment) en prenant comme paramètres de simulation: le trajet de l'avion avec le sens et la direction de déplacement, l'équipement mobile UE se déplaçant à une vitesse de 1200 km/h, à 10 km d'altitude, une fréquence porteuse de 2 GHz, une distance inter-site de 100 km (i.e. Inter-Site Distance ou ISD). Cette représentation n'est pas restrictive et met en évidence la valeur du Doppler et le changement du signe quand un équipement mobile se déplace vers une station de base et quand il s'éloigne d'une station de base.

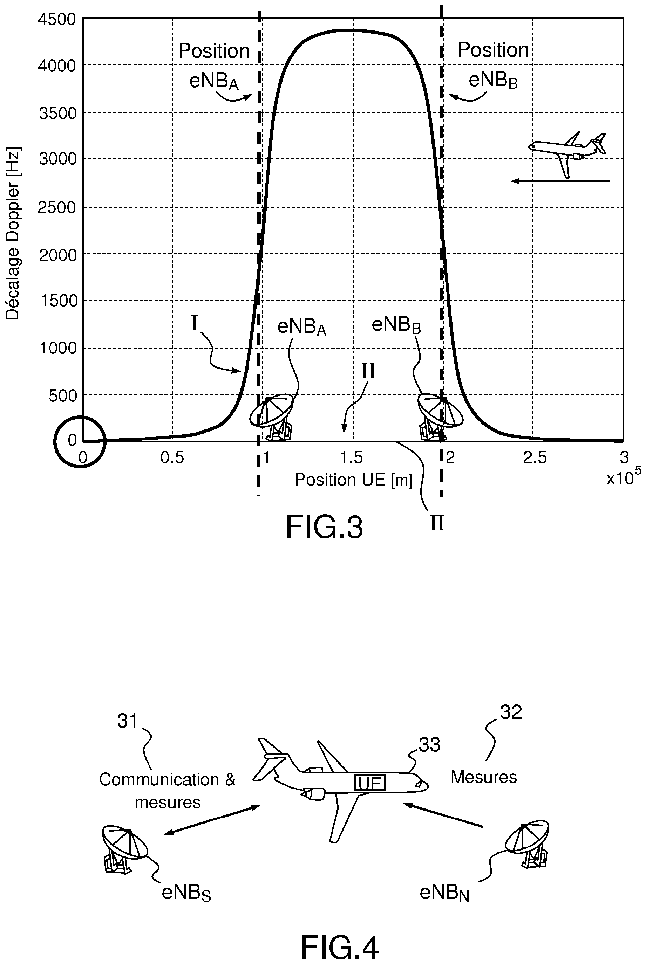

La figure 3 schématise la correction du décalage Doppler par un équipement mobile UE qui corrige le décalage Doppler provenant de la station eNB$_B$, courbe II. La correction prend en compte les paramètres de simulation suivants: un équipement mobile UE se trouvant dans un avion ou à l'extérieur et se déplaçant à une vitesse de 1200 km/h, à 10 km d'altitude, à une fréquence porteuse de 2 GHz et à une distance inter-site de 100 km (i.e. Inter-Site Distance ou ISD). On constate que le décalage Doppler par rapport à la station eNB$_A$ a augmenté et que, si le décalage Doppler est compensé par rapport à la station de base eNB$_B$ (pour pouvoir communiquer avec eNB$_B$), la mesure de la station eNB$_A$ sera inexacte et va affecter le HandOver. Si on compense la somme des signaux reçus de la station de base eNB$_B$ et de la station de base eNB$_A$ dans le but de compenser le signal reçu de la station de base eNB$_B$, on peut augmenter le décalage par rapport à la station eNB$_A$ comme il sera décrit plus loin dans la description.

La figure 4 schématise le passage d'un avion avec un ou plusieurs utilisateurs mobiles UE situés dans un avion 33 entre une première cellule de desserte avec les deux aspects communication et mesure, 31 et une cellule cible potentielle avec un seul aspect, mesure seulement, 32. L'UE mesure et communique avec la cellule de desserte qui représente donc un point d'accès au réseau mobile et, en même temps, l'UE mesure la cellule cible potentielle.

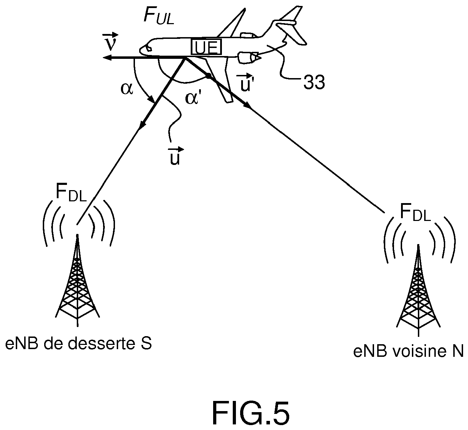

La figure 5 illustre un exemple de notations utilisées pour le calcul de la compensation Doppler, avec :

- $v$ : le module du vecteur vitesse de l'UE donné par les informations GPS, par exemple,

- $\alpha$ : l'angle entre la direction de déplacement de l'UE, matérialisée par le vecteur unitaire $\vec{v}$ et la direction du vecteur unitaire directeur de l'axe équipement mobile UE-cellule de desserte S, noté $u$. Cet angle est calculé à partir de la position de l'équipement mobile (e.g. des informations GPS) et de la station eNB de desserte (e.g. à partir d'une base de données contenant des informations relatives à la station de desserte eNB et/ou le numéro de la cellule de desserte fourni par la pile LTE UE, par exemple),

- $\alpha'$ : angle entre la direction de déplacement de l'équipement mobile, matérialisée par le vecteur unitaire $\vec{v}$ et la direction du vecteur unitaire directeur de l'axe équipement mobile-cellule voisine N notée $\vec{u'}$. Cet angle est calculé à partir de la position de l'équipement mobile (e.g. des informations GPS) et de la eNB potentiellement cible (e.g. à partir d'une base de données de stations de base et/ou le numéro de la cellule voisine potentiellement cible fourni par la pile LTE UE, par exemple),

- $F_{VL}$ : fréquence porteuse utilisée en voie UL,
- $F_{DL}$ : fréquence porteuse utilisée en voie DL.

Sans sortir du cadre de l'invention, on peut avoir un environnement en trois dimensions ou 3D et la cellule voisine peut se trouver après la station de base de desserte, avant ou à côté.

Avant de détailler des exemples de mise en œuvre du procédé selon l'invention, quelques rappels sur les signaux CRS sont donnés. Les signaux CRS font partie d'un mécanisme déjà existant dans la norme LTE. Les signaux de référence CRS (« Cell-specific Reference Signals » en Anglais) sont normalement utilisés pour permettre à l'équipement mobile de mesurer des cellules de fréquences différentes ou des cellules qui utilisent la même bande de fréquence que la cellule de desserte.

La spécification technique TS (« Technical Specification », en Anglais) 3GPP 36.211 donne une représentation graphique des signaux CRS.

Cette même spécification technique, TS, détaille le calcul des signaux CRS (-à la section 6.10.1 du document 3GPP TS 36.211) à partir d'une séquence initiale $c_{\text{init}}$ avec la formule :

$$c_{\text{init}} = 2^{10} \cdot \left(7 \cdot \left(n_s + 1\right) + l + 1\right) \cdot \left(2 \cdot N_{ID}^{cell} + 1\right) + 2 \cdot N_{ID}^{cell} + N_{CP}$$

On voit que cette séquence initiale est donc dépendante de certains paramètres comme :

1. $n_s$ = numéro du créneau temporel ou slot dans la trame radio ;
2. $l$ = numéro du symbole OFDM dans le slot ;
3. $N_{CP}$ = 1 pour le préfixe cyclique normal et 0 pour le préfixe cyclique étendu ;
4. $N^{cell}_{ID}$ ou l'identité physique de la cellule, sachant qu'au total on peut avoir jusqu'au 504 identifiants cellulaires physiques (et qu'au niveau architecture système on a d'autres moyens qui permettent d'identifier d'une manière unique une cellule quelconque).

La séquence initiale qui sert à générer la séquence de pilotes est donc dépendante de l'identifiant cellulaire physique. Chaque cellule (parmi les 504 identités physiques) utilise donc des séquences de pilotes différentes qui permettent de différencier d'une manière unique une cellule quelconque.

Le détail de calcul d'une séquence initiale est donné, par exemple, dans la section 7.2 du document référencé TS 36.211. Les séquences de génération pseudo-aléatoire sont définies par une séquence Gold connue de l'homme du métier de longueur 31. La séquence obtenue en sortie $c(n)$ est de longueur $M_{PN}$ où $n = 0, 1, ..., M_{PN} - 1$ et elle est définie par :

$$c(n) = \left(x_1(n + N_c) + x_2(n + N_c)\right) \bmod 2$$

$$x_1(n + 31) = \left(x_1(n + 3) + x_1(n)\right) \bmod 2$$

$$x_2(n + 31) = \left(x_2(n + 3) + x_2(n + 2) + x_2(n + 1) + x_2(n)\right) \bmod 2$$

où $N_C$ = 1600 et où la première m-séquence $x_1$ est initialisée avec $x_1(0) = 1$, $x_1(n) = 0$, $n = 1,2,...,30$. L'initialisation de la deuxième m-séquence $x_2$ est dénotée par $c_{\text{init}} = \sum_{i=0}^{30} x_2(i) \cdot 2^i$ ....avec la valeur dépendante de l'application de la séquence. En d'autre mots, la séquence $c(n)$ est obtenue à partir des séquences $x_1$ et $x_2$, ou la séquence $x_1$ est obtenue à partir d'une initialisé avec les valeurs $x_1(0) ... x_1(30)$ et une formule de calcul itératif pour des valeurs à partir de $x_1(31)$ et la séquence $x_2$ est obtenue à partir d'une initialisation $x_2(0).. x_2(30)$ et une formule de calcul itératif pour les valeurs à partir de la valeur $x_2(31)$. Les valeurs $x_2(0).. x_2(30)$ correspondent à une transcription en binaire (valeurs de 0 et 1) de la valeur entière $c_{init}$ décrite auparavant. Une implémentation potentielle de calcul du code de brouillage $c(n)$ avec une méthode de registre à décalage est connue de l'homme du métier.

Les séquences Gold peuvent être utilisées pour faire une synchronisation ou différencier des sources de transmission différentes.

La séquence $c(n)$ est donc utilisée pour le calcul de la valeur des signaux CRS et elle est représentée par une séquence pseudo-aléatoire unique par cellule, avec chaque valeur de séquence dépendante de la position dans le créneau temporel défini par un symbole dans un slot (on a 6, 7 ou 3 symboles par slot en fonction de la configuration : préfixe cyclique étendu; préfixe cyclique normal; ou pour MBSFN abrégé anglo-saxon de Multicast-Broadcast Single-Frequency) et dans la trame en domaine temporel, et dans le créneau fréquentiel défini par une sous-porteuse en domaine fréquentiel décrit dans le standard TS 36.211. La combinaison unique de coordonnées dans le domaine temporel (début et fin d'un symbole LTE) et dans le domaine fréquentiel (début et fin d'une sous-porteuse) indique un élément de ressource (en Anglais « Ressource Element » ou RE) unique dans la grille temps-fréquence obtenue après une transformé de type IFFT au niveau d'un transmetteur LTE (selon des principes de modulation LTE de type OFDM en TS 36.211 connus de l'homme du métier). Chaque élément de ressource a une fonction de transmission de données utiles ou de transmission de pilotes (e.g. CRS ou autre), et plusieurs éléments de ressources peuvent être regroupés dans un bloc de ressources ou bloc ressource RB (en Anglais « Ressource Block ») car un bloc ressource RB est défini par un ensemble de douze sous-porteuses en domaine fréquentiel et un slot en domaine temporel (pour simplifier l'allocation de ressources pour les données utiles qui se fait normalement par deux blocs ressources RB à la fois). La séquence peut servir :

1) à un équipement mobile UE (éventuellement) pour se synchroniser en temps et/ou en fréquence,

2) (principalement) à distinguer et mesurer deux cellules différentes (e.g. avec des identifiants physiques différents).

La séquence de signal de référence $r_{l,n_s}(m)$ est donc définie par :

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,...,2N_{\text{RB}}^{\text{max,DL}} - 1$$

où $n_s$ est le numéro de slot dans une trame radio et $l$ est le numéro de symbole OFDM dans le slot, ou la séquence de génération aléatoire $c(i)$ est définie dans la section 7.2 du document TS 36.211 précité. Le générateur de séquence pseudo-aléatoire sera donc initialisé avec : $c_{\text{init}} = 2^{10} \cdot \left(7 \cdot (n_s + 1) + l + 1\right) \cdot \left(2 \cdot N_{ID}^{cell} + 1\right) + 2 \cdot N_{ID}^{cell} + N_{CP}$ au démarrage de chaque symbole OFDM et où les valeurs de la $N_{CP}$ sont :

$$N_{CP} = \begin{cases} 1 & \text{pour CP normal} \\ 0 & \text{pour CP étendu} \end{cases}.$$

La séquence de signal de référence $r_{l,n_s}(m)$ sera mise en correspondance avec des symboles de modulation à valeur complexe $a_{k,l}^{(p)}$ utilisés comme symboles de référence pour le port $p$ d'antenne dans le slot $n_s$ selon la formule suivante :

$$a_{k,l}^{(p)} = r_{l,n_s}(m')$$

où

$$k = 6m + (v + v_{\text{shift}})\bmod 6$$

$$l = \begin{cases} 0, N_{\text{symb}}^{\text{DL}} - 3 & \text{if } p \in \{0,1\} \\ 1 & \text{if } p \in \{2,3\} \end{cases}$$

$$m = 0,1,...,2 \cdot N_{\text{RB}}^{\text{DL}} - 1$$

$$m' = m + N_{\text{RB}}^{\text{max,DL}} - N_{\text{RB}}^{\text{DL}}$$

Les variables $v$ et $v_{\text{shift}}$ définissent la position dans le domaine fréquentiel pour les différents signaux de référence où v est donné par :

$$v = \begin{cases} 0 & \text{if } p = 0 \text{ and } l = 0 \\ 3 & \text{if } p = 0 \text{ and } l \neq 0 \\ 3 & \text{if } p = 1 \text{ and } l = 0 \\ 0 & \text{if } p = 1 \text{ and } l \neq 0 \\ 3(n_{\text{s}} \bmod 2) & \text{if } p = 2 \\ 3 + 3(n_{\text{s}} \bmod 2) & \text{if } p = 3 \end{cases}$$

Le décalage fréquentiel spécifique CRS est donné par $v_{\text{shift}} = N_{\text{ID}}^{\text{cell}} \bmod 6$.

Les positions des éléments ressources RE sont référencées par les lettres $(k,l)$. Les positions utilisées pour la transmission du signal de référence sur chaque port d'antenne dans un slot ne peuvent pas être utilisées pour une autre transmission sur un autre port d'antenne, c'est-à-dire qu'on ne transmet pas de données sur le port d'une antenne si sur une autre antenne on utilise le même RE pour transmettre des signaux pilotes.

Les sections 6.10.1.1 et 6.10.1.2 du document précité définissent la séquence et le mapping à utiliser pour les réseaux de type unicast (usage habituelle d'un réseau LTE).

D'une manière similaire, les sections 6.10.2.1 et 6.10.2.2 définissent la génération de la séquence et le mapping entre les signaux pilotes et les éléments ressources RE pour les services de diffusion multimédia connus sous l'abréviation anglo-saxonne « MBMS » (Multimedia Broadcast Multicast Service) ou les réseaux MBSFN (Multicast-Broadcast Single-Frequency Network).

Les messages RRC utilisés pour récupérer ou transmettre des informations sont connus de l'homme du métier et décrits dans ce même document.

Le message 'rrcConnectionReconfiguration' est un message spécifique 3GPP envoyé sur le canal logique DCCH dédié pour les messages de contrôle, en voie descendante (DL). Ce message contient :

A - des informations de configuration envoyées à travers le message 'measConfig' qui contient par exemple des identifiants de cellules à mesurer (dans l'élément d'information IE 'MeasObjectEUTRA'), ou des critères pour déclencher un rapport de mesure évènementiel ou périodique (dans l'élément d'information IE 'ReportConfigEUTRA'),
B - des informations concernant le Handover vers une cellule cible à travers un message mobilityControlInfo' qui contient des informations de type 'PhysCellId' avec l'identifiant physique de la cellule cible ou 'CarrierFreqEUTRA' avec la fréquence porteuse de la cellule cible normalement exprimé par une valeur de type ARFCN.

Le message 'measurementReport', et le message 'rrcConnectionReconfigurationComplete' sont des messages spécifiques 3GPP envoyés sur le canal logique DCCH dédié pour les messages de contrôle en voie montante (UL).

Dans le message 'measurementReport' on trouve des rapports de mesure :

A) de la cellule de desserte, e.g. des messages comme le résultat de la mesure en puissance 'rsrpResult' qui contient la valeur de mesure 'RSRP-Range', ou le résultat de la mesure exprime comme un rapport de qualité service 'rsrqResult' qui contient la valeur de la mesure 'RSRQ-Range' et potentiellement aussi un identifiant de la mesure 'MeasId', et/ou

B) de la cellule cible, e.g. des éléments d'information similaires comme 'RSRP-Range' et 'RSRQ-Range' mais aussi l'identifiant physique de la cellule cible mesurée, exprimé par l'IE 'PhysCellId'.

Le message 'rrcConnectionReconfigurationComplete' représente une confirmation que le message 'rrcConnectionReconfiguration' a été bien effectué.

Les éléments d'information IE (ou 'Information Elements' en Anglais) et les messages de configuration, de mesure et de rapport sont décrits en détail dans le document TS 36.331. Les canaux logiques et l'architecture système LTE sont décrits dans la spécification référencée 3GPP 36.300.

La séquence CRS connue est émise sur toute la cellule. L'UE se sert des mesures effectuées sur des signaux de référence CRS afin d'estimer le niveau du signal reçu permettant ainsi, en mode de veille (ou en mode connecté), de sélectionner (ou d'assister la cellule de desserte dans le but de sélectionner) la meilleure cellule (voisine).

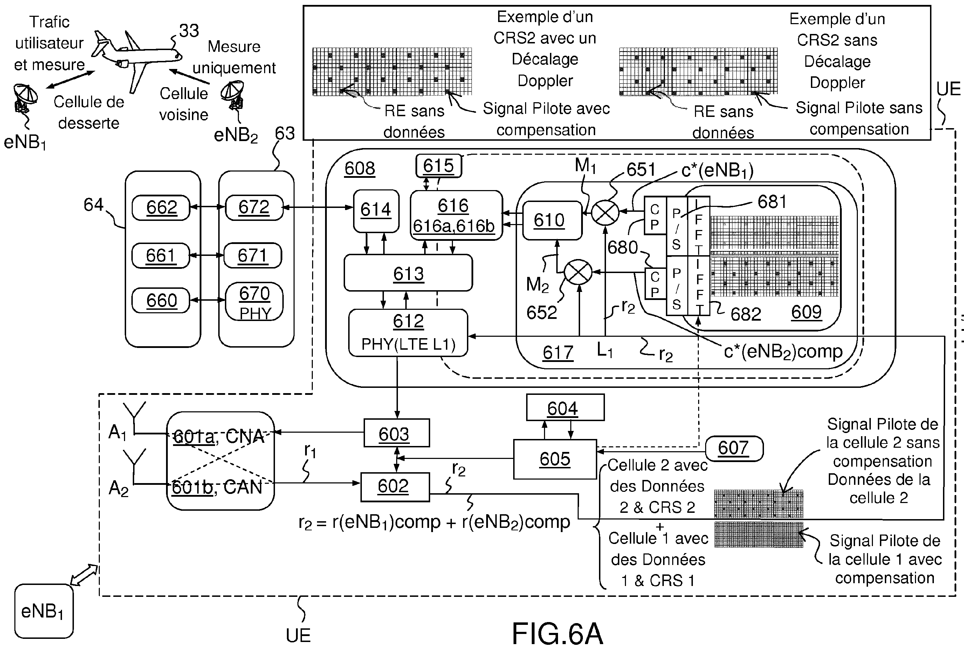

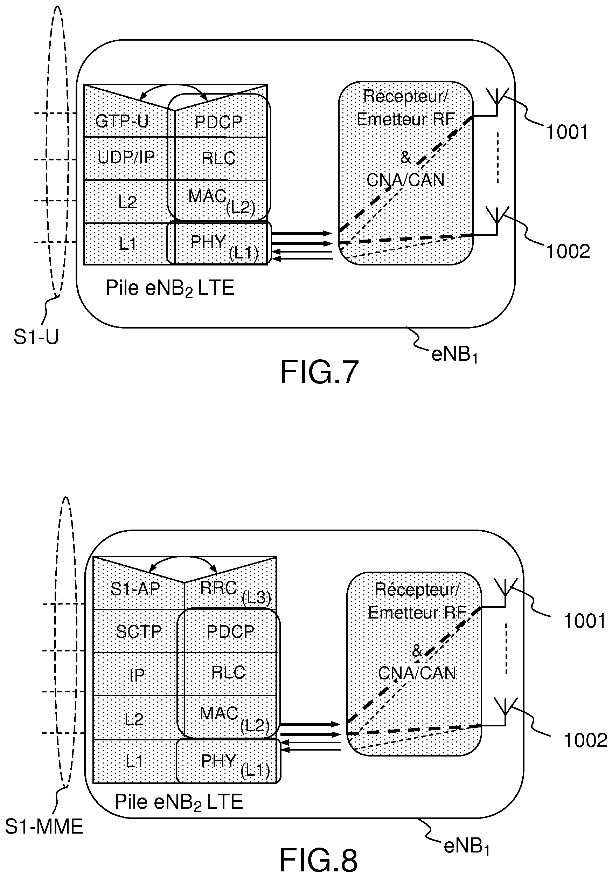

La figure 6A représente une première variante de réalisation pour un système de communication sans fil comprenant un équipement mobile UE situé dans l'avion 33 et plusieurs stations de base, sur cette figure seules sont représentées pour des soucis de simplification, la station de desserte $eNB_1$ à laquelle est relié l'équipement mobile à un moment donné avant le handover et une station de base $eNB_2$ qui sera finalement élue par la procédure de handover dans l'exemple donné. Une station eNB peut avoir une architecture telle que celle décrite à la figure 7 (ce qui correspond à un plan usager ou « user plane ») et à la figure 8 (ce qui correspond à un plan de contrôle ou « control plane »). Chaque station de base assure les communications sans fil dans une cellule correspondante ou dans plusieurs secteurs correspondants. Une station de base génère une séquence de signaux pilotes (ou potentiellement plusieurs séquences, une par chaque secteur) qui peut être reçue par l'équipement mobile. Pour déterminer si la connexion doit se faire avec une cellule associée à une station de base, l'équipement mobile va regarder les intensités relatives des signaux pilotes émis par les différentes stations de base. En général ces intensités mesurées par l'équipement mobile servent à la station de base afin de déterminer si le mobile doit changer ou non de cellule (procédure de handover) et de sélectionner la meilleure cellule dans les meilleures conditions, e.g. la cellule pour laquelle la puissance est maximale. Pour déterminer correctement le niveau de puissance d'un signal, l'équipement mobile va devoir corriger de l'effet Doppler les signaux CRS (reçus et/ou générés localement) et après la détermination d'une ou plusieurs valeurs de puissance le mobile assiste la station de base pour la prise de décision d'un éventuel handover. Plus précisément, l'équipement mobile va devoir 1) corriger de l'effet Doppler par rapport à la cellule de desserte les signaux reçus de la cellule de desserte et au moins une cellule voisine (y compris les signaux CRS reçus à partir de la station de desserte) en utilisant le bloc 602 et (en même temps) 2) compenser les signaux CRS générés localement par l'équipement mobile pour au moins une cellule voisine en utilisant le bloc 609 ou 809, et après la détermination d'une ou plusieurs valeurs de puissance le mobile assiste la station de base pour la prise de décision d'un éventuel handover.

Sur la figure 6A sont représentés un exemple d'architecture pour l'équipement mobile UE, et les couches WiFi utilisées pour des équipements dans l'avion, et un équipement qui représente l'utilisateur final 64 (e.g. qui utilise la même technologie utilisée par l'équipement qui fait le relayage). Par souci de simplification, les éléments constituant une station de base ou une station voisine ne seront pas détaillés car ils sont connus de l'homme du métier.

Si on communique en UL avec la station de desserte eNB1, on va le faire à travers les blocs 614 (couche IP UE), 613 (L2 UE), 612 (L1 UE) pour communiquer des données utilisateur depuis l'équipement mobile vers le réseau IP ou les blocs 616 et éventuellement 615 (couche L3 UE qui inclut les protocoles RRC et NAS), 613 (L2 UE), 612 (L1 UE) pour communiquer des informations destinées à la station de desserte eNB1 pour contrôler la communication, le bloc de compensation en voie montante 603, le CNA, les antennes 1001, 1002 (figure 7, figure 8), le canal de propagation, les antennes de la station de desserte eNB1, la couche L1 de la station de desserte, la couche L2 de la station de desserte (pour les figures 7 et 8), la couche L3 pour contrôler la communication (pour la figure 8), en suivant des principes de communication connus de l'homme du métier.

Si on communique en DL avec la station de desserte eNB1, on va le faire à travers les couches L3 et L2 de la station de desserte eNB1, la couche L1 de la station de desserte, les antennes 1001, 1002 (figure 7, figure 8) de la station de desserte eNB1, le canal de propagation, les antennes d'un équipement UE, le CAN, le bloc de compensation en voie descendante 602, la couche 612 (L1 UE), la couche 613 (L2 UE) jusqu'au bloc 616 et éventuellement au bloc 615 (couche L3 UE qui inclut les protocoles RRC et NAS) pour contrôler la communication ou jusqu'à la couche 614 (couche IP) pour communiquer des données utilisateur depuis le réseau IP vers l'équipement mobile, en suivant des principes de communication connus de l'homme du métier.

Sans sortir du cadre de l'invention, il est possible d'avoir une transmission LTE à la place de WiFi au bord de l'avion. Dans ce cas-là, au lieu d'utiliser un point d'accès (en Anglais « Access Point » ou AP) WiFi, 63 on peut utiliser un équipement équivalent LTE comme par exemple une femto-cell LTE, en agissant comme une station de base de faible puissance. Sans sortir du cadre de l'invention, il est possible également d'avoir une transmission UMTS à la place de WiFi au bord de l'avion. Dans ce cas-là, au lieu d'utiliser un point d'accès (en Anglais « Access Point » ou AP) WiFi (63) on peut utiliser un équipement équivalent UMTS comme par exemple une femto-cell 3G ou HSUPA/HSDPA, en agissant comme une station de base de faible puissance, termes connus de l'homme du métier.

Le procédé est mis en œuvre dans un équipement mobile UE adapté aux conditions de mobilité à grande vitesse et qui comporte, par exemple, les éléments décrits ci-après en rapport avec la figure 6A. Dans l'exemple donné l'équipement mobile UE ne comporte pas de répéteur. Selon un autre mode de réalisation, l'équipement mobile UE peut comporter un module de répétition du signal vers les utilisateurs à bord ou passagers non représentés sur la figure pour des raisons de simplification. Le AP WiFi ou le Femto-Cell peut être intégré dans l'équipement mobile, contrairement à l'exemple de la figure 6A qui le représente comme une unité séparée.

Un récepteur/émetteur RF, 601b, 601a, comporte une antenne réceptrice et/ou émettrice A1 et une antenne émettrice et/ou réceptrice A2, une voie de réception qui effectue le filtrage, la transposition en bande de base et la conversion analogique/numérique (CAN) du signal radio reçu, une voie de transmission qui réalise la conversion numérique/analogique (CNA), la transposition à la fréquence radio, l'amplification et le filtrage du signal transmis sur le lien sans fil. Les antennes sont, par exemple, positionnées verticalement et horizontalement (par rapport à la direction de vol de l'avion) pour des polarisations différentes et le signal réceptionné (et transmis) est obtenu/combiné sur les deux antennes.

Une unité de compensation Doppler en émission 603 - voie UpLink (UL) - depuis l'équipement mobile vers la cellule de desserte: effectue la pré-compensation du décalage Doppler sur la voie UL (sens UE vers eNB) ; en décalant la fréquence du signal transmis par l'UE de la valeur de la consigne $-fd_{UL,s}$ de la cellule de desserte ; sachant que si le mobile s'approche d'une station de base, le Doppler est positif et s'il s'en éloigne le Doppler est négatif; la pré-compensation correspond à un changement de signe de la valeur Doppler en UL (dans le but e.g. de translater le signal émis dans la bonne bande de fréquence pour faciliter la réception au niveau de la station de base - pour une réception transparente au niveau de la station de base, sans une modification supplémentaire de la station de base).

Un premier exemple de compensation Doppler est le suivant :

→ l'équipement mobile UE s'approche d'une station de base, le Doppler perçu par rapport à cette station est positif et égal à une valeur $+f_{D2}$:

◦ Sans pré-compensation au niveau du bloc UE 603 (i.e. UE transmet sur la fréquence $f_{UL}$), eNB reçoit le signal sur $f_{UL}+f_{D2}$;
◦ Avec pré-compensation au niveau du bloc UE 603 (i.e. UE transmet sur la fréquence $f_{UL}- f_{D2}$) eNB reçoit le signal sur $f_{UL}$.

→ L'équipement mobile UE s'éloigne d'une station de base, le Doppler perçu par rapport à cette station est négatif et égal à une valeur $-f_{D2}$:

◦ Sans pré-compensation au niveau du bloc UE 603 (i.e. UE transmet sur la fréquence $f_{UL}$), eNB reçoit le signal sur $f_{UL}-f_{D2}$;
◦ Avec pré-compensation au niveau du bloc UE 603 (i.e. UE transmet sur la fréquence $f_{UL} + f_{D2}$) eNB reçoit le signal sur $f_{UL}$.

Une unité de compensation Doppler en réception 602 - voie DownLink (DL) - depuis la cellule de desserte vers le UE : effectue la compensation du signal réceptionné par l'UE de la valeur de la consigne - $fd_{DL,S}$ de la cellule de desserte; sachant que si le mobile s'approche d'une station de base, le Doppler est positif et s'il s'en éloigne, le Doppler est négatif. La compensation correspond à un changement de signe de la valeur Doppler en DL (avec le but e.g. de translater le signal réceptionné dans la bonne bande de fréquence pour faciliter la réception au niveau d'un UE - pour une interprétation plus transparente de la pile protocolaire d'un UE, et sans une modification supplémentaire de la station de base);
Une base de données de eNB : 604.

Un deuxième exemple de compensation Doppler est le suivant :

→ L'équipement mobile UE s'approche d'une station de base, le Doppler perçu par rapport à cette station est positif et égal à une valeur $+f_{D1}$:

◦ Sans compensation au niveau du bloc UE 602, UE reçoit le signal sur $f_{DL}+f_{D1}$ (eNB transmettait sur $f_{DL}$);
◦ Avec compensation au niveau du bloc UE 602, UE reçoit le signal sur $f_{DL}$ (eNB transmettait sur $f_{DL}$).

→ L'équipement mobile UE s'éloigne d'une station de base, le Doppler perçu par rapport à cette station est négatif et égal à une valeur -$f_{D1}$:

◦ Sans compensation au niveau du bloc UE 602, UE reçoit le signal sur $f_{DL}$-$f_{D1}$ (eNB transmettait sur $f_{DL}$);
◦ Avec compensation au niveau du bloc UE 602, UE reçoit le signal sur $f_{DL}$ (eNB transmettait sur $f_{DL}$).

Une unité de gestion de la mobilité: 605, réalise le calcul des consignes -$fd_{UL}$ en voie UL (vers la cellule de desserte et vers la cellule ou de plusieurs cellules voisines) et -$fd_{DL}$ en voie DL (de la cellule de desserte et de la cellule ou de plusieurs cellules voisines) en temps réel. L'unité de gestion de mobilité est connectée à :

- La base de données de eNB 604 contenant des informations relatives au déploiement du réseau Air-Sol (positions des différentes eNB, taille des cellules, sectorisation...),
- Un dispositif de navigation satellite (par exemple un système GPS) ou un autre système de localisation, 607, fournissant la position, les coordonnées et éventuellement des informations par rapport au vecteur vitesse de l'UE, mis à jour en temps réel,
- Une pile LTE, 608, qui reçoit des informations permettant le calcul des différentes consignes de compensation Doppler, entre autres: identifiant de la cellule de desserte, liste de cellules voisines, numéro de la cellule de destination (e.g pour la commande de HandOver) ; la pile est par exemple conforme aux spécifications 3GPP LTE et normalement configurable avec les moyens prévus par le standard.

Le système comporte aussi les éléments suivants :

Un module de génération locale des signaux de référence spécifique à une cellule CRS (Cell-specific Reference Signal): 609,
Une unité d'estimation de puissance d'une cellule : 610,
Une couche L1 distribuée entre les éléments : 612, 617,
Une couche L2 (PDCP/RLC/MAC) : 613,
Une couche (ou plusieurs couches) qui sert à la communication de données/IP : 614,
Les couches L1 et L2 sont communes pour la partie plan usager ou « user plane » (formée par les éléments 612, 617, 613, 614) et la partie plan de contrôle ou « control plane » (formée par les éléments 612, 617, 613, 616, 615) de la norme LTE et ses évolutions,
Une couche NAS : 615,
Une couche RRC : 616 avec ses composantes 616a de réception Dec RRC, 616b de transmission Enr RRC,
Un commutateur 63 Ethernet ou WiFi (avec le rôle d'un répéteur), représenté par les couches 670, 671, 672, cette dernière étant raccordée à l'unité 614 de l'UE, qui achemine le trafic IP en provenance de la pile LTE UE vers les utilisateurs raccordés à un serveur de divertissement de bord, et, dans le sens inverse, le trafic IP des utilisateurs vers la pile LTE,
Un utilisateur final 64 (End-User) au bord représenté par les couches 660, 661, 662, qui bénéficie de différents services: internet, VoIP, vidéo streaming, conférence vidéo, etc.

Dans le cas où le bloc 605 reçoit de la couche PHY ou calcule directement les décalages par rapport aux références de synchronisation en utilisant les signaux de synchronisation primaires PSS et secondaires SSS (conformément à la norme TS 36.211), il n'est pas nécessaire de disposer d'une base de données 604 et d'un système de positionnement 607. Les signaux reçus seront utilisés pour se synchroniser et les valeurs de décalage Doppler à appliquer seront déduites de ces signaux PSS/SSS.

Les mécanismes d'échanges entre les blocs précités sont connus de l'homme du métier, notamment dans la spécification TS précitée.

Une station de desserte ou une station voisine comportent, une couche L1 comme 612, une couche L2 comme 613, une couche pour les données IP comme 614.

Les opérations d'ajout de préfix cyclique, CP ou « add CP », 680, la conversion parallèle-série P/S, 681, la transformée inverse de Fourier IFFT 682, peuvent être effectuées directement dans le bloc 609 comme il est illustré sur la figure 6A (ou à l'extérieur du bloc 609). La compensation peut s'effectuer dans le bloc 609, avant ou après la transformée Fourier.

Sans sortir du cadre de l'invention à la place de CP on peut simplement faire du zéro padding, on garde un intervalle de garde avec des échantillons nuls de la même taille que la taille du préfixe cyclique.

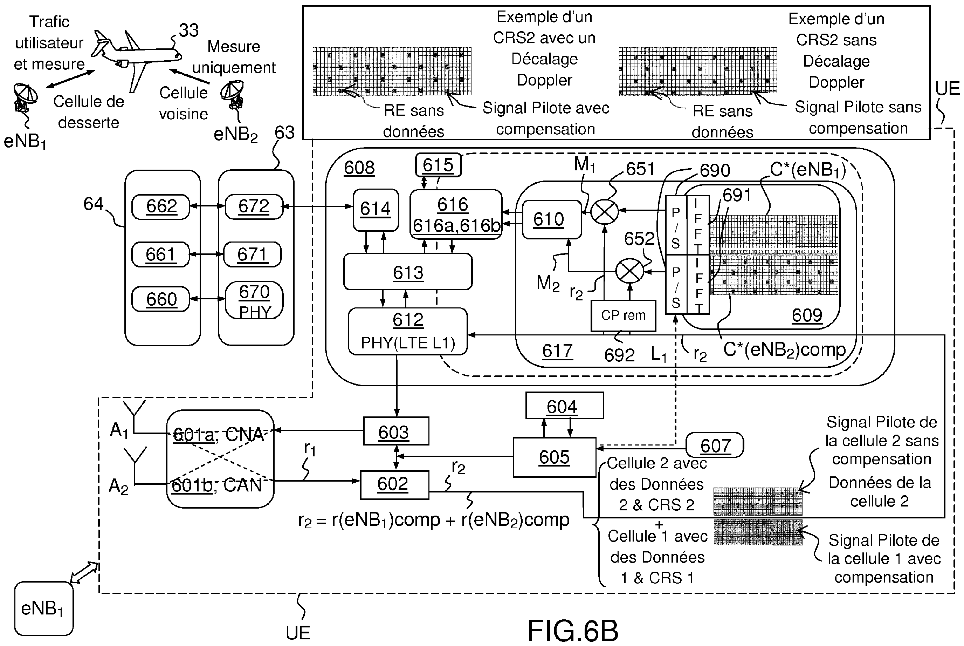

La figure 6B représente le cas où les opérations de conversion parallèle-série P/S 690 et de transformation inverse de Fourier IFFT 691 sont effectuées directement dans le bloc 609 et un bloc effectuant le retrait de préfixe cyclique « CP Removal » 692 est disposé avant le mélangeur 651 et 652. Si ce bloc est utilisé, le bloc « CP » de la figure 6A qui ajoute le préfixe cyclique n'est plus nécessairement utilisé - par contre il est toujours possible d'utiliser un bloc qui fait du zéro padding à sa place.

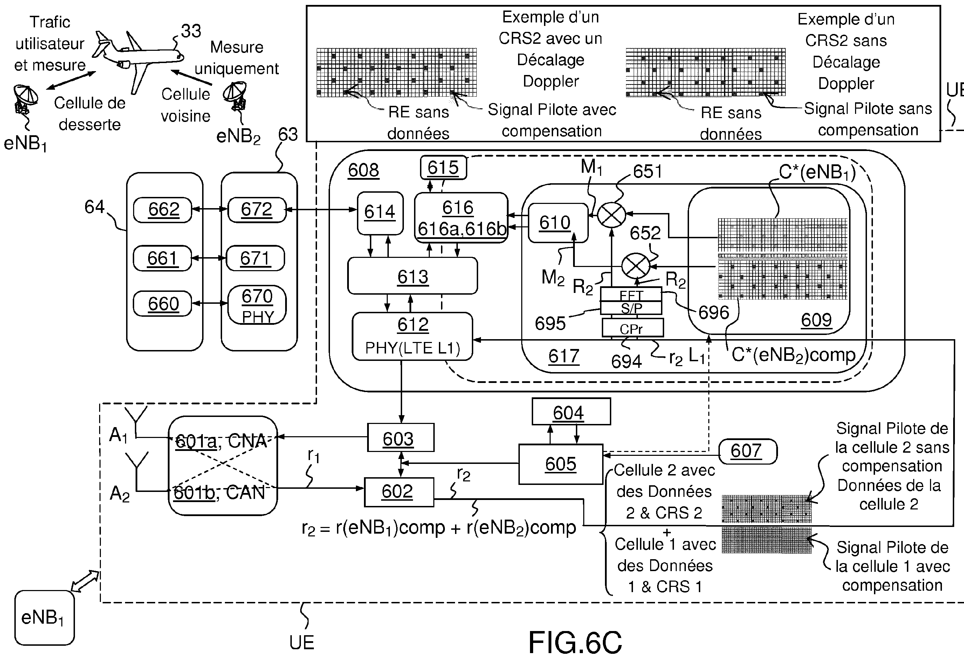

La figure 6C correspond à une implémentation dans le domaine fréquentiel. Le module 609 peut fonctionner directement en fréquence, et on ajoute un bloc 694 « **CP r** » = bloc « CP Removal » qui enlève le préfixe cyclique et un bloc « S/P » 695 qui effectue une conversion série-parallèle (différent de P/S) avant d'effectuer la transformée Fourier par l'opération FFT, 696, et la multiplication avec le signal compensé et généré par le module 609.

Les figures 7 et 8 décrivent les fonctionnalités précédemment mentionnées d'une station eNB : celle de la communication des données utilisateur vers (en DL) /depuis (en UL) l'interface S1-U avec le S-GW (voir Figure 7) et celle de transmission et relayage des informations destinées à contrôler la communication (voir Figure 8) en DL et en UL en utilisant la couche RRC de la eNB ou la couche NAS de l'entité de management de mobilité MME (la dernière à travers l'interface S1-MME avec la MME). De plus, une eNB peut-être connectée à une autre eNB à travers l'interface X2-U (l'interface n'a pas été représentée sur la Figure 7 pour des soucis de simplification) pour la transmission des données utilisateur (interface très similaire avec S1-U) et à travers l'interface X2-C (l'interface connue de l'homme du métier n'a pas été représentée sur la Figure 8 pour des soucis de simplification) pour la transmission des informations de contrôle (interface très similaire avec S1-MME sauf la dernière couche du protocole S1-AP qui est remplacée par X2-AP), en suivant des principes de communication connus de l'homme du métier.

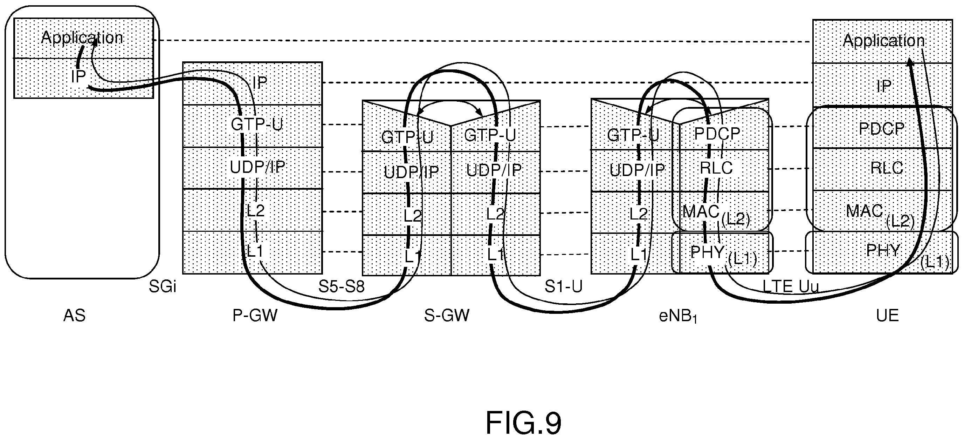

La Figure 9 décrit la pile protocolaire pour le transfert des données utilisateur entre un serveur applicatif AS et l'équipement mobile UE. En DL le signal passe par les couches d'un P-GW du haut vers le bas : IP, GTP-U, UDP/IP, L2 P-GW, L1 P-GW, puis remonte dans le L1 S-GW, L2 S-GW, UDP/IP, GTP-U et sera transmis vers la eNB de desserte et plus loin vers le UE en traversant les couches L2 (PDCP, RLC, MAC) et L1 (PHY) de la station de base eNB, en suivant des principes de communication connus de l'homme du métier et décrits e.g. dans la TS 36.300. Très similairement, en UL le signal passe par les couches d'un UE du haut vers le bas, remonte dans les couches d'une eNB par L1 (PHY), L2 (MAC, RLC, PDCP), et après il sera transmis vers L1 S-GW, L2 S-GW, UDP/IP, GTP-U puis sera transmis vers P-GW et plus loin vers le serveurs applicatif AS, en suivant des principes de communication connus de l'homme du métier et décrits dans la TS 36.300.

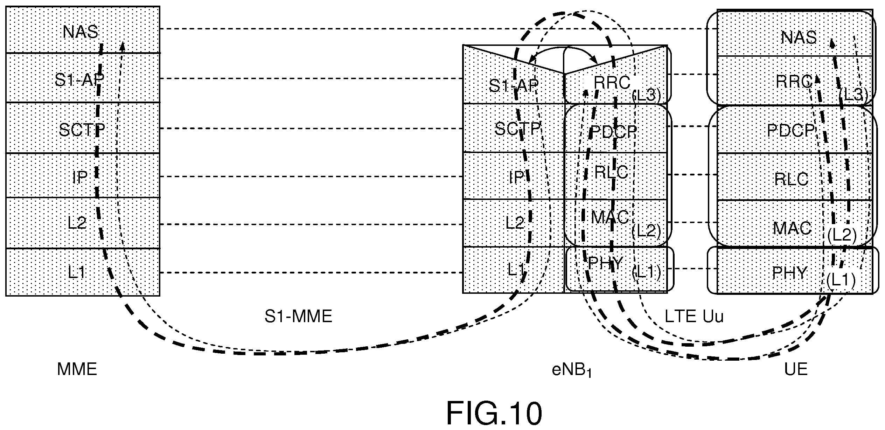

La Figure 10 décrit la pile protocolaire pour le transfert des informations de contrôle entre l'entité de management de mobilité MME et l'équipement mobile UE, ou entre la station de base eNB et l'équipement mobile UE. En DL les informations de contrôle passent par les couches d'un MME du haut vers le bas à partir de la couche NAS, en traversant les couches/protocoles S1-AP, SCTP, IP, L2, L1 puis remontent dans la eNB qui relaye d'une manière transparente la couche NAS vers l'utilisateur final UE, en traversant les couches L3 (RRC), L2 (PDCP, RLC, MAC), L1 (PHY), en suivant des principes de communication connus de l'homme du métier et décrits e.g. dans la TS 36.300. De manière similaire, en DL les informations de contrôle passent par les couches d'une station eNB du haut vers le bas à partir de la couche L3 (RRC) en traversant les couches L2 (PDCP, RLC, MAC), L1 (PHY), en suivant des principes de communication connus de l'homme du métier et décrites e.g. dans la TS 36.300. La Figure 10 décrit également le transfert des messages de contrôle par une eNB pour les messages destines à la couche RRC (fonction eNB) et à la couche NAS (fonction MME), en utilisant les couches L1 (PHY) et L2 (MAC, RLC, PDCP) d'une eNB, en suivant des principes de communication connus de l'homme du métier et décrits dans le document TS 36.300.

Les blocs 662, 661, 660 (figure 6A) correspondent à une pile protocolaire utilisée au niveau de l'utilisateur final (e.g. ordinateur portable, tablette ou portable utilisant e.g. du WiFi si le répéteur utilise du WiFi).

Les blocs 672, 671, 670 (figure 6A) correspondent à une pile protocolaire WiFi qui sert comme point d'accès (AP) WiFi pour les utilisateurs finaux.

Les signaux échangés entre les différents éléments vont être décrits en relation avec la figure 6A. Le récepteur de l'équipement mobile reçoit le signal en provenance de la station de desserte $eNB_1$ et les signaux en provenance d'une ou de plusieurs stations voisines, dans l'exemple la station voisine $eNB_2$. En sortie du récepteur 601b le signal $r_1$ est composé du signal $r(eNB_1)$ émis par la cellule de desserte $eNB_1$ et du signal $r(eNB_2)$ émis par la cellule voisine $eNB_2$. $r_1$ est transmis à l'unité de compensation Doppler 602 qui applique une première valeur de consigne de compensation qui correspond à un signal nécessaire pour compenser (seulement) le signal de la cellule de desserte. Cette compensation correspond au décalage Doppler sur le signal émis par la cellule de desserte. Cette compensation est nécessaire pour permettre au mobile de communiquer (et en particulier pour la voie descendante de recevoir des informations/données de contrôle et de données utiles) avec la (ou à partir de la) station de base. Le signal $r_2$ issu de l'unité de compensation Doppler est constitué du premier signal compensé $r(eNB_1)comp$ et du signal $r(eNB_2)comp$ compensé par rapport à la $eNB_1$, i.e. un deuxième signal $r_2$, $R_2$ issu de l'unité de compensation est constitué d'un premier signal compensé $r(eNB_1)comp$, et au moins du signal $r(eNB_2)comp$ réceptionné depuis au moins la cellule voisine $eNB_2$. Le procédé applique au moins une correction de décalage de fréquence à au moins une deuxième séquence de signaux de référence spécifiques à au moins une cellule ou station de base $eNB_2$, la valeur de décalage Doppler $\Delta D$ au niveau d'un équipement mobile correspondant à l'écart entre la cellule voisine $eNB_2$ et la cellule de desserte $eNB_1$, le calcul et la valeur de la correction ou consigne à appliquer sont détaillés plus loin dans la description. Ce deuxième signal $r_2$ est transmis dans cet exemple à la pile protocolaire UE LTE de l'équipement mobile. Le deuxième signal $r_2$ est transmis à la couche physique 612 (et 617), à un premier mélangeur de signaux 651 et à un deuxième mélangeur de signaux 652.

Le premier module de combinaison de signaux 651 reçoit le deuxième signal $r_2$ et une première séquence $c^*(eNB_1)$ de signaux de référence spécifique à la cellule de desserte. Le deuxième module de combinaison de signaux 652 reçoit le deuxième signal $r_2$, et ladite deuxième séquence $c^*(eNB_2)comp$, de signaux de référence issu de l'unité de compensation de signaux de référence 609.

Les signaux $r_1$ et $r_2$ contiennent, par exemple, chacun des pilotes, des données utiles et des données de contrôle qui peuvent être destinées à plusieurs équipements mobiles et à plusieurs utilisateurs. De plus, si plusieurs cellules transmettent en même temps sur la même bande de fréquences des pilotes ou des données (utilisateur ou contrôle), on va retrouver la somme de ces signaux (avec un décalage potentiel fréquentiel et temporel, et potentiellement avec des puissances différentes) dans les signaux $r_1$ et $r_2$. Dans l'exemple considéré, on retrouve au moins un signal provenant de la station de base de desserte ($eNB_1$) et un signal provenant de la station de base voisine ($eNB_2$). Il est possible d'utiliser différents moyens, opérations IFFT ou FFT et des composants fonctionnels, avec comme objectif d'avoir une multiplication de type $r_2 \times c^*$ (domaine temporel) ou $R_2 \times C^*$ (domaine fréquentiel) que l'on peut effectuer échantillon par échantillon ou bloc par bloc.

Le premier mélangeur (bloc de multiplication ou de corrélation) de signaux 651 reçoit aussi un signal comprenant une séquence $c^*(eNB_1)$ (complexe conjuguée) obtenue à partir d'une séquence $c(eNB_1)$ de signaux CRS générée (localement) par l'équipement mobile pour la cellule de desserte selon une méthode connue de l'homme du métier. En sortie de ce premier mélangeur (multiplication ou corrélation) un signal composé du mélange de signaux $M_1(r_2, c^*(eNB_1))$ est transmis au module d'estimation de puissance afin d'estimer la puissance $P_1(eNB_1)$ associée à la cellule de desserte. La valeur de la puissance $P_1(eNB_1)$ est transmise à la couche RRC de l'équipement mobile pour être insérée dans un signal qui va être transmis vers les couches inférieures et après vers l'unité de compensation Doppler 603 pour la transmission vers la station de base de desserte à travers le transmetteur du mobile.

Le deuxième mélangeur (bloc de multiplication ou de corrélation) de signaux 652 reçoit d'une part le signal $r_2$ et d'autre part un signal comprenant une séquence de signaux CRS générée localement par l'équipement mobile pour la cellule voisine et compensée d'une valeur de décalage Doppler $\Delta D$, fournie par l'unité de gestion de la mobilité. Cette valeur de décalage $\Delta D$ (au niveau d'un équipement mobile) correspond, par exemple au décalage Doppler cellule voisine - cellule de desserte. Le calcul et la valeur de la correction ou consigne à appliquer sont détaillés plus loin dans la description. Le signal $c^*(eNB_2)comp$ comprenant la séquence compensée de signaux CRS (et après l'opération « * » de conjugaison complexe) est mélangé (multiplication ou corrélation) au signal $r_2$. Le mélange $M_2(r_2, c^*(eNB_2)comp)$ est transmis au module d'estimation de puissance 610 afin d'estimer la puissance $P_2(eNB_2)$ associée à la cellule voisine. La valeur de la puissance $P_2(eNB_2)$ est transmise à la couche RRC de l'équipement mobile pour être insérée dans un signal qui va être transmis vers les couches inférieures et après vers l'unité de compensation Doppler 603 pour la transmission vers la station de base de desserte à travers le transmetteur du mobile en voie montante.

Le $\Delta D$ est une valeur réelle d'écart Doppler, qui correspond à l'écart Doppler (physique) entre 1) le Doppler relatif par rapport à la cellule de desserte mesuré au niveau d'un équipement mobile et 2) le Doppler relatif par rapport à la cellule voisine mesuré au niveau d'un équipement mobile. $\Delta D$ est une valeur que l'invention veut corriger. La consigne est le moyen/la signalisation nécessaire pour corriger l'écart/le décalage Doppler $\Delta D$. $\Delta D$ et la consigne correspondent à la même valeur physique qu'on peut exprimer par la même formule - si l'approximation de la consigne est exacte. La consigne n'est pas forcement exprimée en Hz, et peut-être exprimée en KHz, ou normalisée avec la vitesse v ou avec la vitesse de la lumière c, ou exprimée par une valeur positive à la place d'une valeur négative, etc. Il y a donc une relation directe entre $\Delta D$ et la valeur de la consigne (mais pas forcément une valeur identique), et la consigne est faite pour corriger $\Delta D$. S'il y a un offset fréquentiel supplémentaire au niveau de la transmission d'une station de base, il peut être incorporé directement dans $\Delta D$. En pratique il peut y avoir une petite différence entre les deux notions : $\Delta D$ et consigne. Pour corriger l'offset fréquentiel supplémentaire, la consigne doit incorporer également l'écart entre les offsets fréquentiels de la station de base de desserte et voisine dans la correction de la $\Delta D$.

Le signal contenant les deux valeurs de puissance $P_1$, $P_2$, est compensé en voie montante avant d'être transmis, par exemple à la cellule de base qui va comparer la valeur de puissance $P_2(eNB_2)$ et la valeur de puissance $P_1(eNB_1)$ afin de décider s'il est nécessaire de procéder au handover et aussi de choisir l'identifiant de la cellule voisine la plus appropriée. La cellule de base comporte les modules adaptés afin de comparer les différentes valeurs de puissance mesurées pour différentes stations voisines et décider de la meilleure cellule voisine à utiliser pour effectuer le handover. Les différents algorithmes de handover peuvent être basés sur une simple comparaison ou sur des méthodes basées sur des techniques de type hystérésis comme décrit dans le document TS 36.331. Par exemple, la station de base de desserte peut vérifier pendant un certain temps que la condition pour effectuer le handover ne change pas. De plus, la configuration et les rapports du mobile peuvent se faire d'une manière périodique ou d'une manière évènementielle.

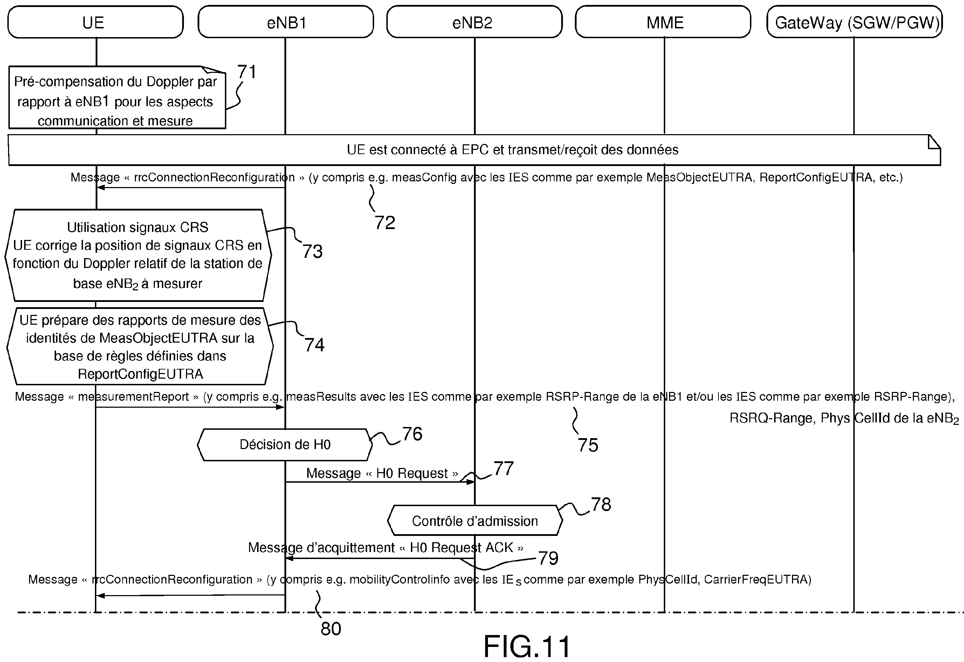

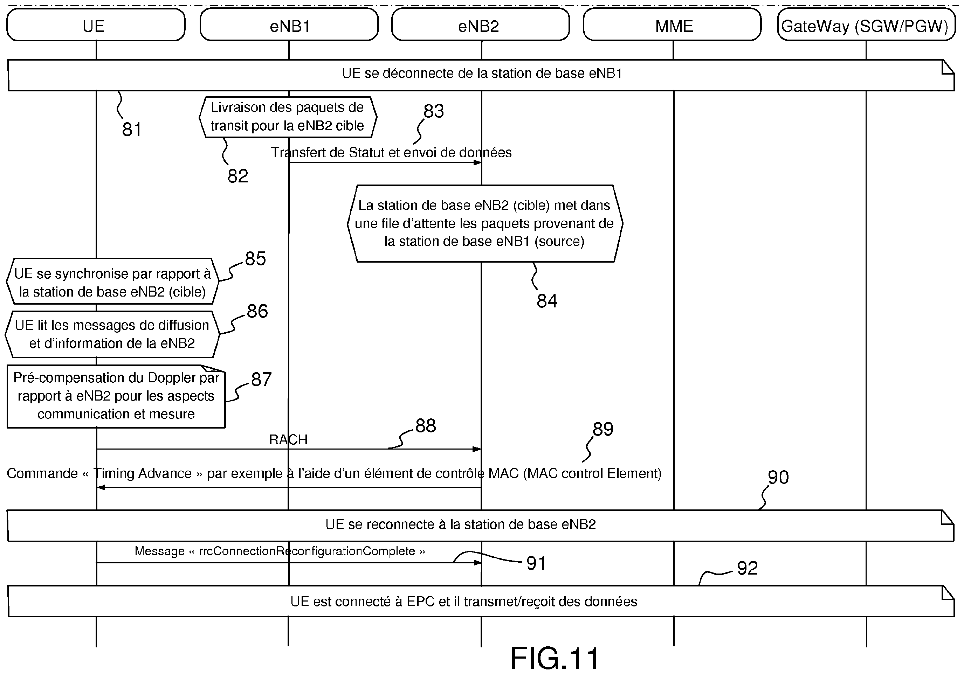

Les valeurs de puissance seront transmises selon un mécanisme décrit par exemple à la figure 11.

Contrairement aux implémentations possibles présentées par les figures 6A et 6B, dans la figure 6C le deuxième bloc de multiplexage ou de corrélation reçoit le signal $R_2$ et une séquence de signaux CRS générée par le module externe et compensée. Le mélange $M_2(R_2, C^*(eNB_2)comp)$ est transmis au module d'estimation de puissance 610. La valeur de puissance $P_2(eNB_2)$ est calculée et envoyée vers la couche RRC du mobile.

La valeur de consigne de compensation/correction Doppler pour la cellule de desserte en voie montante et en voie descendante est obtenue, par exemple, en utilisant les informations de positionnement du mobile (e.g. GPS), 607, et à partir des informations de positionnement de la station de base de desserte contenues dans la base de données. L'unité de gestion de mobilité va exécuter par exemple les trois étapes suivantes

1) Etape Localisation : calcul position géographique/coordonnées du mobile et identification de la position géographique/coordonnées de la cellule de desserte.
2) Etape mesure vitesse relative par rapport à la station de desserte (en fonction :

a. du temps parcouru entre deux ou plusieurs positions consécutives, et des positions de la station de base et la position de l'avion/train/plateforme de grande vitesse),

3) Etape de calcul de compensation Doppler correspondante à la vitesse relative 2) (le calcul doit être réactualisé de temps en temps) pour les fréquences de transmission/réception.

Les signaux CRS sont créés dans l'exemple donné à l'intérieur de la pile LTE, en prenant compte le décalage calculé à l'extérieur de la pile e.g. par l'unité de gestion de la mobilité, ce qui permet d'améliorer la précision de mesure de la puissance des signaux émis par une station et reçus par l'équipement mobile.

Selon une variante de réalisation, les signaux seront mélangés après une opération de corrélation si le signal n'est pas complètement synchronisé (e.g. si la référence temporelle n'est pas connue par l'unité de génération de séquences ou par celle de calcul de puissance).

Le calcul des consignes est par exemple réalisé de la manière décrite ci-après :

Calcul des consignes à appliquer pour la cellule de desserte :

Les consignes de compensation Doppler à appliquer en voie UL, *-fd$_{UL,S}$*, et en voie DL, *-fd$_{DL,S}$*, pour la cellule de desserte sont calculées de la manière suivante :

○ Les consignes à appliquer en voie UL et DL sont notées *-fd$_{UL,S}$* et *-fd$_{DL,S}$* respectivement. La lettre S est ici employée pour désigner la cellule de desserte (ou « Serving cell » en Anglais), avec laquelle l'équipement mobile communique et qui sert également à contrôler la communication par la station de desserte.
○ Les décalages Doppler subis par le signal en voie montante et en voie descendante, respectivement sont :
○ $$fd_{UL,S} = \frac{v.F_{UL}}{c}.cos(\alpha) \quad et \quad fd_{DL,S} = \frac{v.F_{DL}}{c}.cos(\alpha), \quad avec :$$

○ v : le module du vecteur vitesse de l'UE,
○ $\alpha$: l'angle entre la direction de déplacement de l'UE et la direction du vecteur unitaire directeur de l'axe équipement mobile UE-cellule de desserte S.

Les consignes *-fd$_{UL,S}$* et *-fd$_{DL,S}$* permettent de compenser ces décalages, avec les notations données à la figure 5. La formule utilisée pour le calcul Doppler est un exemple avec une approximation pour des vitesses relatives beaucoup plus faibles que la vitesse de la lumière et qui ne tient pas compte du facteur de dilatation du temps de la relativité restreinte.

Le procédé selon l'invention repose notamment sur le calcul de la compensation Doppler à appliquer sur les signaux CRS transmis en voie descendante de la station eNB vers un équipement mobile UE, afin de permettre à la pile protocolaire de l'équipement mobile située dans une première cellule de desserte de mesurer du mieux possible le niveau de signal reçu depuis chaque cellule voisine, cellules cibles candidates au Handover, tout en restant connectée à la cellule de desserte. L'idée est de corriger la position des signaux CRS en fonction du Doppler relatif de la station de base à mesurer. Une fois la mesure de puissance effectuée, l'équipement mobile pourra envoyer une valeur de mesure très précise vers la station de base de desserte qui décidera de changer de cellule ou non d'une manière plus optimale, basée sur des mesures réelles et qui prennent en compte les effets du canal de communication dans des conditions de propagation normale (e.g. sans Doppler).

Le procédé va calculer le décalage fréquentiel à appliquer aux signaux CRS afin de mesurer la puissance d'une cellule voisine, en voie descendante. Les signaux CRS sont transmis en permanence par une cellule vers l'équipement mobile. Il est ainsi possible qu'un équipement mobile UE reçoive des signaux de référence transmis par plusieurs cellules voisines, en même temps et/ou sur les mêmes ressources fréquentielles.

Le procédé selon l'invention exécute par exemple les étapes décrites ci-après. Le décalage Doppler par rapport à la cellule voisine en voie DL (notée $fd_{DL,N}$) peut être calculé de la manière suivante :

$$fd_{DL,N} = \frac{v.F_{DL}}{c}.cos(\alpha'),$$ où $\alpha'$ est l'angle entre le vecteur unitaire $\vec{v}$ (ou entre la direction de déplacement de l'UE) et la direction du vecteur unitaire directeur de l'axe UE-cellule voisine N, notée $\vec{u}'$ (voir Figure 4),

$$fd_{DL,N\_plus\_probable} = \frac{v.F_{DL\_cellule\_N\_plus\_probable}}{c}.cos(\alpha'cellule\_plus\_probable),$$ où

$\alpha'cellule\_plus\_probable$ est l'angle entre le vecteur unitaire $\vec{v}$ et la direction du vecteur unitaire directeur de l'axe UE-cellule voisine N le plus probable (cellule voisine la plus probable à être utilisée pour le handover e.g. dans la direction de déplacement e.g. en ayant un meilleur signal reçu ou alternativement le Doppler relatif maximal par rapport à la cellule de desserte),

$$fd_{DL,N} = \frac{v.F_{DL}}{c},$$ où on fixe comme cellule cible pour le HO une cellule lointaine dans la direction de déplacement mais toujours visible ou mesurable (et donc le $cos(\alpha') = 1$).

La lettre N est ici employée pour désigner la cellule voisine (ou « Neighbour cell » en Anglais). A noter qu'aucune consigne de compensation fréquentielle n'est appliquée en voie montante pour la cellule voisine N avant qu'on décide d'effectuer l'accès initial (RACH) sur la cellule voisine (e.g. pendant ou après la procédure de HO). La compensation en voie montante est toujours faite par rapport à la station de desserte S (avec laquelle le mobile est en train de communiquer).

De plus, en voie descendante (DL), il est possible que la correction par rapport à la cellule de desserte ne se fasse pas au même moment que la cellule voisine. La consigne à appliquer aux signaux CRS générés localement par l'équipement mobile et correspondant à une cellule voisine de la cellule de desserte pour pouvoir corriger l'offset fréquentiel est donc :

- Avant que la correction de la cellule de déserte soit faite (e.g. par les blocs 605 et 602) :

$$+fd_{DL,N} = +\frac{v.F_{DL}}{c}.cos(\alpha')$$

- Après que la correction de la cellule de desserte soit faite (e.g. par les blocs 605 et 602):

$$-fd_{DL,S} + fd_{DL,N} = -\frac{v.F_{DL}}{c}.cos(\alpha) + \frac{v.F_{DL}}{c}.cos(\alpha').$$

La valeur de consigne à appliquer aux signaux CRS générés localement par l'équipement mobile et correspondant à la cellule voisine reçue en voie descendante est obtenue, par exemple, en utilisant les informations de positionnement du mobile (e.g. GPS), 607, et à partir des informations contenues dans la base de données y compris des informations de positionnement de la station de base de desserte et de la station de base voisine. L'unité de gestion de mobilité va exécuter par exemple les quatre étapes suivantes :

1) Etape Localisation : calcul position géographique/coordonnées du mobile, identification de la position géographique/coordonnées de la cellule de desserte, et identification de la position géographique/coordonnées de la cellule voisine.

2) Etape mesure vitesse relative par rapport à la station de desserte (en fonction :

    a. du temps parcouru entre deux ou plusieurs positions consécutives, et
    b. des positions de la station de base de desserte et la position de l'avion/train/plateforme de grande vitesse),

3) Etape mesure vitesse relative par rapport à la station voisine (en fonction :

    a. du temps parcouru entre deux ou plusieurs positions consécutives, et
    b. des positions de la station de base voisine et la position de l'avion/train/plateforme de grande vitesse),

4) Etape de calcul de compensation Doppler correspondante aux vitesses relatives 3) et/ou 2) (et il faut réactualiser de temps en temps le calcul) pour les fréquences de transmission/réception.

Le procédé selon l'invention ne se limite pas à une application pour une seule station de base voisine, car dans les étapes précédentes de l'étape 1) jusqu'à l'étape 4) on peut calculer indépendamment la compensation Doppler pour un nombre illimité de cellules voisines.

La figure 11 est un schéma représentant un exemple d'échanges de messages et d'informations entre les différents éléments du système notamment, la station de base de desserte, une station de base voisine et l'équipement mobile.

L'équipement mobile UE effectue une pré-compensation 71 du Doppler par rapport à la première station de base de desserte $eNB_1$, l'UE est alors connecté et il transmet et reçoit des données.

Le message 'rrcConnectionReconfiguration' 72 est un message spécifique 3GPP envoyé sur le canal DCCH (canal logique dédié pour les messages de contrôle) en voie descendante (DL). Ce message contient :

- des informations de configuration envoyées à travers le message 'measConfig' qui contient par exemple des identifiants de cellules à mesurer (dans l'élément d'information IE 'MeasObjectEUTRA'), ou par exemple des critères pour déclencher un rapport de mesure évènementiel ou périodique (dans l'élément d'information IE 'ReportConfigEUTRA'),
- des informations concernant le Handover HO vers une cellule cible à travers le message mobilityControlInfo' (qui contient des informations de type 'PhysCellId' avec l'identifiant physique de la cellule cible ou 'CarrierFreqEUTRA' avec la fréquence porteuse de la cellule cible normalement exprimée par une valeur de type ARFCN abrégé anglo-saxon de absolute radio-frequency channel number).

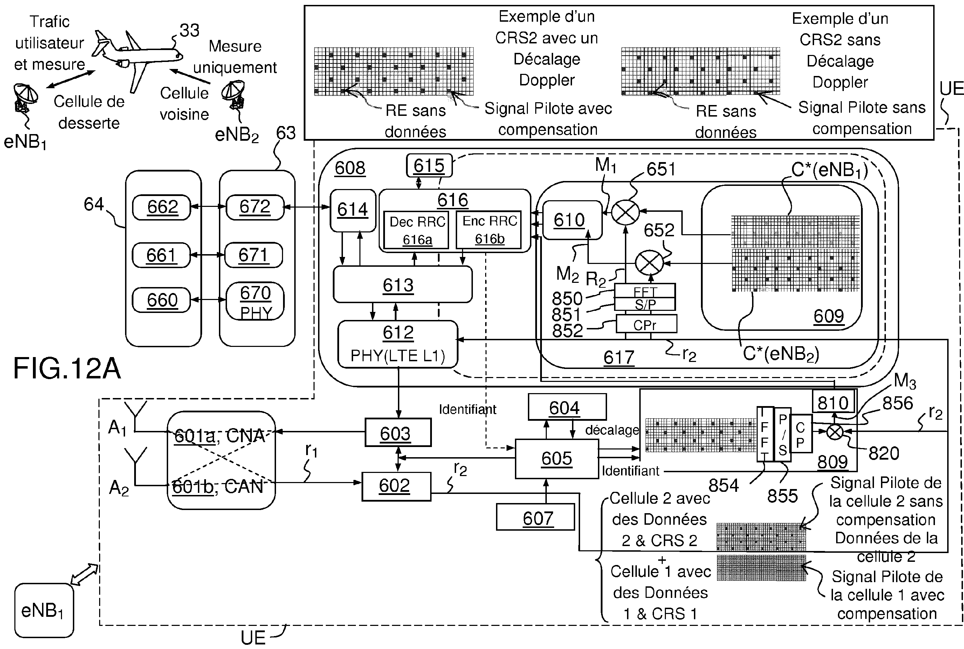

L'équipement mobile UE met en œuvre 73 le procédé selon l'invention basé sur l'utilisation spécifique des signaux CRS qui permet à l'UE de corriger les signaux CRS en fonction du Doppler relatif de la station de base $eNB_2$, dont plusieurs exemples sont donnés à titre illustratif aux figures 6A à 6C et 12A à 12C.

L'UE prépare ensuite 74 les rapports de mesure des identités sur la base de règles définies dans la norme. L'UE transmet ensuite un message 'measurementReport', 75, vers la station de base de desserte qui va prendre la décision de Handover 76, cette dernière transmettant 77 une requête de Handover HO vers la deuxième station de base $eNB_2$. Cette deuxième station effectue un contrôle d'admission 78, et transmet un message d'acquittement 79 vers la première station de base de desserte, $eNB_1$. $eNB_1$ transmet ensuite un message 'rrcConnectionReconfiguration' 80 vers l'UE.

Les messages 'measurementReport' et 'rrcConnectionReconfigurationComplete' sont des messages spécifiques 3GPP envoyés sur le canal DCCH (canal logique dédié pour les messages de contrôle) en voie montante (UL). Dans le message 'measurementReport' on trouve des rapports de mesure :

- de la cellule de desserte, i.e. des messages comme le résultat de la mesure en puissance 'rsrpResult' qui contient la valeur de mesure 'RSRP-Range', ou le résultat de la mesure qui exprime comme un rapport de qualité service 'rsrqResult' qui contient la valeur de la mesure 'RSRQ-Range' et potentiellement aussi un identifiant de la mesure 'MeasId', et/ou
- de la cellule cible, i.e. des éléments d'information similaires comme 'RSRP-Range' et 'RSRQ-Range' mais aussi l'identifiant physique de la cellule cible mesurée, exprimé par l'IE 'PhysCellId'.

Le message 'rrcConnectionReconfigurationComplete' signifie une confirmation que le message 'rrcConnectionReconfiguration' a été bien effectué. Le message 'rrcConnectionReconfigurationComplete' sera utilisé plus tard - voir message 91 envoyé comme réponse au message 'rrcConnectionReconfiguration' 80 et pour valider la procédure de HO (e.g. les procédures ou une partie de procédures entre les étapes 81 et 90).

Les éléments d'information IE (ou 'Information Elements' en Anglais) et les messages de configuration, de mesure et de rapport sont décrits en détail dans la référence TS 36.331. Les canaux logiques et l'architecture système LTE sont décrits dans le document TS 36.300.

L'UE se déconnecte, 81, de la première station de base de desserte, puis il y a une livraison des paquets de transit pour la $eNB_2$ cible, 82, avec transfert de statut de la première station de base de desserte et un envoi de données, 83, vers la deuxième station de base $eNB_2$. La deuxième station de base $eNB_2$ met dans une file d'attente les paquets provenant de la station de base de desserte, 84.

L'équipement mobile se synchronise 85, par rapport à la deuxième station de base $eNB_2$, puis il lit les messages de diffusion et d'information de la deuxième station $eNB_2$, 86, puis il va effectuer 87 une pré-compensation du décalage Doppler par rapport à la deuxième station de base pour les aspects communication et mesure. L'UE transmet le message RACH, 88, à $eNB_2$, qui retourne une commande d'avance de temps ou « timing advance », 89. L'UE se reconnecte à la station de base $eNB_2$, 90, et transmet le message 'rrcConnectionReconfigurationComplete', 91, l'UE est alors connecté à la deuxième station de base $eNB_2$, et peut transmettre et recevoir des données.

La légende de la figure est la suivante:

UE =équipement mobile connecté à la station $eNB_1$, en train de préparer un HandOver (HO) vers la station $eNB_2$,
$eNB_1$= $eNodeB_1$, station de base de desserte ou cellule de desserte ou cellule source,
$eNB_2$=$eNodeB_2$, station de base de voisine cible ou cellule voisine cible,
UE, eNodeB, EPC (Evolved Packet Core), MME (Mobility Management Entity), S-GW (Serving GateWay) et P-GW (Packet Data Network GateWay ou PDN-GW) sont des terminologies classiques et connues (au moins) dans le monde 3GPP,
RACH= Random Access Channel, canal utilisé par le UE pendant l'accès initial (ou pendant la procédure de HO car en LTE on utilise une procédure de handover de type « Hard HandOver » c'est-à-dire on coupe la transmission avant de se reconnecter à une nouvelle cellule).

Les figures 12A à 12C schématisent une deuxième variante de réalisation du procédé et du système pour sa mise en œuvre dans laquelle la séquence des signaux CRS pour au moins une station voisine sera générée non plus au niveau de la pile protocolaire mais dans un module de l'équipement mobile externe à la pile.

Dans cette variante de réalisation, les éléments identiques à ceux décrits à la figure 6A respectivement 6B, 6C portent les mêmes références. Par rapport à la figure 6A respectivement 6B, 6C, le système comporte en plus :

• Un module de génération externe des signaux CRS : élément 809,
• Une unité externe d'estimation de puissance d'une cellule : élément 810,
• Un bloc de multiplexage ou de corrélation 820 recevant le signal mesuré comprenant le signal compensé pour la cellule de desserte et le signal non compensé de la cellule voisine, avec une séquence de signaux pilotes générée par le module de génération externe de signaux CRS pour la cellule voisine.

La figure 12A illustre un exemple d'implémentation dans le domaine temporel comme la figure 6A. Un ensemble de blocs FFT, S/P et CP removal 850, 851, 852 est installé avant les deux mélangeurs 651 et 652 sur le chemin de signal r2. Un ensemble 854, 855, IFFT, P/S et 856, CP est positionné avant le mélangeur 820. La compensation peut s'effectuer dans le bloc 809, avant ou après la transformée de Fourier.

Le premier module de combinaison de signaux 651 reçoit le deuxième signal $R_2$ et une première séquence $C*(eNB_1)$ de signaux de référence spécifique à la cellule de desserte. Le deuxième module de combinaison de signaux 652 reçoit le deuxième signal $R_2$, et ladite deuxième séquence $C*(eNB_2)comp$, de signaux de référence issu de l'unité de compensation de signaux de référence 809.

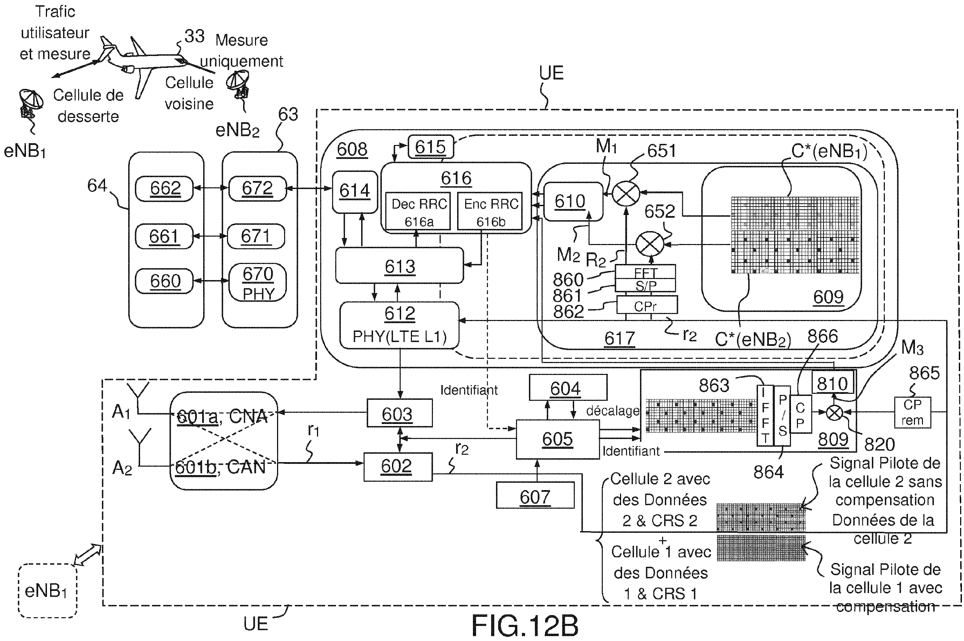

La figure 12B illustre le pendant du système décrit à la figure 6B. Un ensemble de blocs FFT, S/P et CP removal, 860, 861, 862 est installé avant les deux mélangeurs 651 et 652 sur le chemin de signal r2. Un ensemble IFFT 863, P/S 864, CP 866 est positionné avant le mélangeur 820 et un bloc CP Removal 865 pour la deuxième entrée du mélangeur.

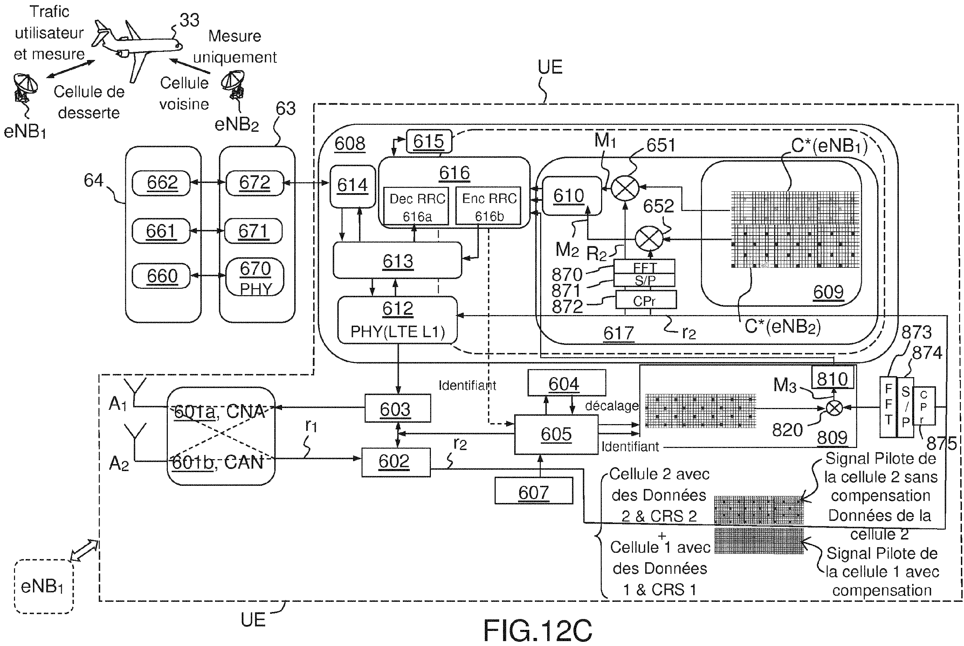

La figure 12C représente un exemple d'implémentation dans le domaine fréquentiel. Un ensemble de blocs 870, FFT, 871, S/P et 872 CP removal est installé avant les deux mélangeurs 651 et 652 sur le chemin de signal $r_2$. Un ensemble 873, FFT, 874, S/P, 875 CP Removal est disposé avant le mélangeur à l'extérieur de la pile protocolaire 608 sur le chemin de signal $r_2$, dans le but d'obtenir son équivalent en domaine fréquentielle, $R_2$.

La mise en œuvre du procédé selon l'invention pour cette « deuxième » variante de réalisation décrite à la figure 12A comporte, en plus des étapes qui s'effectuent à l'extérieur de la pile protocolaire 608, étapes décrites en relation avec la figure 6A pour l'implémentation temporelle, figure 6C pour l'implémentation fréquentielle les étapes supplémentaires décrites ci-après.

A partir des identifiants cellulaires (IDs) obtenus à partir des informations de la couche RRC (après le décodage), e.g. des informations envoyées en DL par la station de base de desserte, le module de gestion de la mobilité va déterminer la valeur de décalage Doppler à appliquer. Les Informations/IDs des cellules voisines sont transmises au module de génération de séquence de pilotes CRS afin de générer les signaux CRS pour les stations voisines, les signaux CRS sont compensés par un décalage Doppler.

Le premier bloc de multiplexage ou de corrélation de signaux 651 reçoit aussi un signal comprenant une séquence $c(eNB_1)$ ou $C(eNB_1)$ de signaux CRS générée par l'équipement mobile pour la cellule de desserte selon une méthode connue de l'homme du métier. En sortie de ce premier mélangeur un signal composé du mélange de signaux $M_1(r_2, c*(eNB_1))$ ou $M_1(R_2, C*(eNB_1))$ est transmis au module d'estimation de puissance afin d'estimer la puissance $P_1(eNB_1)$ associée à la cellule de desserte. La valeur de la puissance $P_1(eNB_1)$ est transmise à la couche RRC de l'équipement mobile pour être insérée dans un signal qui va être transmis vers les couches inférieures L2 (613), L1 (612) et après vers l'unité de compensation Doppler 603 pour une transmission vers la station de base de desserte.

Le deuxième bloc de multiplexage ou de corrélation de signaux 652 reçoit d'une part le signal $r_2$ ou $R_2$ et d'autre part un signal comprenant une séquence obtenue d'une séquence de signaux CRS généré par l'équipement mobile pour la cellule voisine. Le signal $c*(eNB_2)$ ou $C*(eNB_2)$ est mélangé au signal $r_2$ ou $R_2$. Le mélange $M_2(r_2, c*(eNB_2))$ ou $M_2(R_2, C*(eNB_2))$ est transmis au module d'estimation de puissance afin d'estimer la puissance $P_2(eNB_2)$ associée à la cellule voisine.

Le troisième bloc de multiplexage ou de corrélation reçoit le signal $r_2$ et une séquence de signaux CRS générée par le module externe et compensée. Le mélange $M_3(r_2, c*(eNB_2)comp)$ est transmis au module d'estimation de puissance 810. La valeur de puissance $P_3(eNB_2)$ est calculée et envoyée vers la couche RRC du mobile. Dans le cadre des figures 12A à 12C, l'effet Doppler est corrigé au niveau d'une unité de génération de signaux CRS externe à la pile protocolaire de l'unité mobile, et on conserve le signal issu de l'unité de génération externe lorsqu'il existe un signal issu de la pile protocolaire. Similairement, la couche RRC du mobile peut bloquer ou ignorer e.g. l'estimation $P_2$ obtenue à partir de la couche PHY du mobile.

Contrairement aux implémentations possibles présentées par les figures 12A et 12B, dans la figure 12C le troisième bloc de multiplexage ou de corrélation reçoit le signal $R_2$ et une séquence de signaux CRS générée par le module externe et compensée. Le mélange $M_3(R_2, C*(eNB_2)comp)$ est transmis au module d'estimation de puissance 810. La valeur de puissance $P_3(eNB_2)$ est calculée et envoyée vers la couche RRC du mobile.

L'estimation de puissance de la cellule (ou de plusieurs cellules) voisine(s) est envoyée dans une information de type RSRP(s) de la cellule voisine (ou de plusieurs cellules voisines) ou directement dans un message de type RRC MeasurementReport qui va écraser le message calculé par la pile LTE avec une mesure de puissance plus exacte. Puis, l'information sera envoyée dans un message RRC classique vers la station de base de desserte et en prenant en compte un traitement « classique » c'est-à-dire un passage par les couches PDCP, RLC, MAC, PHY et avec un chiffrement et codage convenable.

Une première méthode pour calculer la valeur de la puissance utilise une corrélation du signal reçu (en domaine temporel) avec un modèle généré à partir d'une séquence CRS connue en avance par le récepteur de l'équipement mobile UE. Ce modèle est localement généré par le récepteur d'un UE et il a la structure OFDM spécifique e.g. LTE mais il contient seulement des pilotes sans des données utiles pour utilisateur. On peut estimer la puissance d'une station de base voisine $eNB_2$ grâce à l'équation suivante :

$$\hat{P}_{eNB2} = \max_{0 \le \tau \le N_{FFT} + N_{CP} - 1} \left( \left| \frac{1}{N} \sum_{n=0}^{N-1} r_2[n+\tau] \cdot c^*_{eNB2,comp}[n] \right| \right)^2$$

On retrouve la même puissance estimée $\hat{P}_{eNB2}$, mais contrairement à la deuxième méthode décrite ci-après le calcul est fait à partir du signal $r_2[n]$ qui est décalé temporellement sur la durée d'un symbole, avec $\tau$ dans l'intervalle $0 \le \tau \le N_{FFT} + N_{CP} - 1$, $N_{CP}$ le nombre des échantillons par préfixe cyclique et $N_{FFT}$ le nombre des échantillons par symbole utile OFDM. Alternativement on peut décaler le modèle généré localement $c^*_{eNB2,comp}[n]$ sur le signal reçu $r_2[n]$. La valeur $N$ représente le nombre total des échantillons qu'on utilise pour faire l'estimation (e.g. ça peut correspondre par exemple à une durée d'un TTI 1 ms, une trame de 10 ms, 10 trames ou 100 ms etc.), la notation « * » à la conjuguée d'une valeur complexe, et la notation « | | » à la valeur absolue. Le signal ou le modèle $c^*_{eNB2,comp}[n]$ est un signal en temps, obtenu après le calcul IFFT et l'ajout d'un préfixe cyclique, sur les valeurs conjuguées des signaux CRS qui ont été placées au bon endroit et avec les bonnes valeurs dans la grille fréquence-temps d'une transmission de type OFDM. Ces signaux correspondent aux signaux CRS transmis par la station de base $eNB_2$ qui ont été compensés par l'équipement mobile pour prendre en compte le décalage relatif Doppler, et qui correspondent aux valeurs complexes non-conjuguées $c_{eNB2}[n]$.

Comme pour la deuxième méthode, le décalage relatif Doppler n'est pas forcément égal à celui entre la station de base mesurée et l'équipement mobile UE, car le mobile UE peut introduire un décalage supplémentaire à cause d'un offset fréquentiel supplémentaire, ou à cause d'une précorrection du Doppler par rapport à une autre cellule ou par rapport à la station de base de desserte (e.g. dans ce cas $eNB_1$). Par exemple, la compensation à appliquer aux signaux CRS générés localement par l'équipement mobile avant que la correction de la cellule de déserte soit faite (e.g. par les blocs 605 et 602) est $+fd_{DL,eNB2} = +\frac{v.F_{DL}}{c} . cos(\alpha')$, et après que la correction de la cellule de desserte soit faite (e.g. par les blocs 605 et 602) est $-fd_{DL,eNB1} + fd_{DL,eNB2} = -\frac{v.F_{DL}}{c} . cos(\alpha) + \frac{v.F_{DL}}{c} . cos(\alpha')$ si on considère un offset fréquentiel nul entre la station de base et le mobile UE.

Cette méthode utilise le préfixe cyclique CP ce qui peut améliorer l'estimation de la puissance.

$r_2[n]$ est le signal reçu. On peut écrire $r_2[n]$ comme une somme $\sqrt{P_{eNB2}} \cdot c_{eNB2,\Delta D}[n] + \sqrt{P_{s,eNB2}} \cdot s_{eNB2,\Delta D}[n] + b[n] + i[n]$

où $\sqrt{P_{eNB2}} \cdot c_{eNB2,\Delta D}[n] + \sqrt{P_{s,eNB2}} \cdot s_{eNB2,\Delta D}[n]$ est le signal réceptionné de la station de base eNB$_2$ avec les pilotes $c_{eNB2,\Delta D}[n]$ et le signal utile $s_{eNB2,\Delta D}[n]$, le bruit $b[n]$ et l'interférence $i[n]$, où $i[n]$ peut se décomposer en interférence provenant d'une autre station de base voisine ou station de base de desserte (e.g. eNB$_1$) ou un autre système qui utilise la même bande de fréquence (ou une bande proche qui interfère avec).

Une autre méthode est utilisée après une opération de transformée de Fourier FFT du coté récepteur UE sur le signal reçu composé du signal en provenance de la cellule de desserte et d'un ou de plusieurs signaux en provenance de la ou des stations de base (i.e., en voie DL), éventuellement après le préfixe cyclique a été enlevé. La lettre « C* » est associée aux variantes de réalisation réalisées dans le domaine fréquentiel, par exemple à la figure 6C ou à la figure 12C.

On peut estimer la puissance d'une station de base voisine eNB$_2$ grâce à l'équation suivante :

$$\hat{P}_{eNB2} = \left| \frac{1}{N_{RS}} \sum_{n=0}^{N_{RS}-1} R_2[n] \cdot C_{eNB2,comp}^*[n] \right|^2$$

où $P_{eNB2}$ est la puissance estimée, $R_2[n]$ est le signal reçu (après une opération de transformée de Fourier FFT du coté récepteur) et la récupération des positions relatives aux pilotes et $C_{eNB2,comp}^*[n]$ sont les valeurs complexes conjuguées de la séquence CRS, séquence qui a été localement régénérée et compensée par l'UE en fonction du Doppler relatif, et qui correspond aux pilotes (non-conjugués) transmis par la station de base $C_{eNB2}[n]$. Le signal reçu $R_2[n]$ peut en effet se réécrire comme $\sqrt{P_{eNB2}} \cdot C_{eNB2,\Delta D}[n] + B[n] + I[n]$, où on retrouve la vraie puissance de la station de base eNB$_2$ mesurée au niveau de la station mobile UE, et les pilotes $C_{eNB2,\Delta D}[n]$ reçus de la station de base eNB$_2$ et affectés par un Doppler relatif $\Delta D$ , du bruit $B[n]$ et d'interférence $I[n]$ qui peut-être par exemple une somme de plusieurs signaux comme le signal de la station de base eNB$_1$ (qui peut interférer avec la mesure effectuée sur eNB$_2$ si e.g.

1) l'identifiant de la cellule eNB$_1$ et eNB$_2$ en modulo 6 ont la même valeur ou si
2) la cellule eNB$_1$ transmet des données sur des « Ressource Elements » RE ou la cellule eNB$_2$ transmet des pilotes) ou des autres signaux provenant des autres stations de base ou d'autres systèmes propres à l'avion, des systèmes satellitaires ou des autres systèmes commerciaux terrestres utilisant la même bande de fréquence ou une fréquence proche de celle mesurée par le UE. La valeur $N_{RS}$ représente le nombre de pilotes qu'on utilise pour faire l'estimation (ou le nombre de « reference signals »), la notation « * » à la conjuguée d'une valeur complexe, et la notation « | | » à la valeur absolue.

Il est possible de trouver :

Première méthode, méthode 1 domaine temporel

$$\max_{0 \leq \tau \leq N_{FFT}+N_{CP}-1} \left( \left| \frac{1}{N} \sum_{n=0}^{N-1} \left( \sqrt{P_{eNB2}} \cdot c_{eNB2,\Delta D}[n+\tau] + \sqrt{P_{s,eNB2}} \cdot s_{eNB2,\Delta D}[n+\tau] + b[n+\tau] + i[n+\tau] \right) \cdot c_{eNB2,comp}^*[n] \right| \right)^2$$

$$\cong \max_{0 \leq \tau \leq N_{FFT}+N_{CP}-1} \left( \left| \frac{1}{N} \sum_{n=0}^{N-1} \sqrt{P_{eNB2}} \cdot c_{eNB2,\Delta D}[n+\tau] \cdot c_{eNB2,comp}^*[n] \right| \right)^2$$

qui est un estimé proche de la puissance réceptionnée à partir de la station de base voisine eNB$_2$.
ou encore
Deuxième méthode, méthode 2 domaine fréquentiel

$$\left| \frac{1}{N_{RS}} \sum_{n=0}^{N_{RS}-1} \left( \sqrt{P_{eNB2}} \cdot C_{eNB2,\Delta D}[n] + B[n] + I[n] \right) \cdot C_{eNB2,comp}^{*}[n] \right|^{2}$$

$$\cong \left| \frac{1}{N_{RS}} \sum_{n=0}^{N_{RS}-1} \sqrt{P_{eNB2}} \cdot C_{eNB2,\Delta D}[n] \cdot C_{eNB2,comp}^{*}[n] \right|^{2}$$

qui est un estimé proche de la puissance réceptionnée à partir de la station de base voisine eNB$_2$.

Si la séquence CRS générée localement n'est pas normalisée e.g. elle est multipliée par un facteur de $1/\sqrt{\alpha}$ pour éviter le dépassement de la mémoire ou d'un registre, les deux formules deviennent :

Première méthode

$$\hat{P}_{eNB2} = \max_{0 \le \tau \le N_{FFT}+N_{CP}-1} \left( \left| \frac{\sqrt{\alpha}}{N} \sum_{n=0}^{N-1} r_2[n+\tau] \cdot c_{eNB2,comp}^{'*}[n] \right| \right)^{2}$$

et
Deuxième méthode

$$\hat{P}_{eNB2} = \left| \frac{\sqrt{\alpha}}{N_{RS}} \sum_{n=0}^{N_{RS}-1} R_2[n] \cdot C_{eNB2,comp}^{'*}[n] \right|^{2}$$

où $C_{eNB2,comp}^{'*}[n] = \frac{1}{\sqrt{\alpha}} C_{eNB2,comp}^{*}[n]$ et $c_{eNB2,comp}^{'*}[n] = \frac{1}{\sqrt{\alpha}} c_{eNB2,comp}^{*}[n]$ sont les séquences non-normalisées.

Selon une variante de réalisation, si la compensation en DL par rapport à la cellule de desserte est déjà faite par l'unité de compensation, la compensation faite pour la mesure est « décalage Doppler », cellule voisine - cellule desserte.

Si la compensation en DL par rapport à la cellule de desserte n'est pas encore faite par l'unité de compensation, la compensation faite pour la mesure est « décalage Doppler », cellule voisine.

Le procédé décrit précédemment peut être utilisé pour différentes versions ou technologies qui sont fournis par la technologie 3GPP (e.g. LTE, LTE Advanced) ou IEEE (e.g. WiMax). Il peut aussi être mis en œuvre dans le cas de la norme IEEE 802.11 ou la norme Wifi, les normes autour de l'UMTS, pour des couches physiques basées sur des technologies 4G comme l'OFDM (Orthogonal Frequency Division Modulation), le CDMA (Code division multiple access), ou pour la technologie 5G (GFDM pour Generalized Frequency Division. Multiplexing, FBMC pour filter bank multicarrier).

Au niveau du bloc de traitement de la mobilité ou encore à l'extérieur de ce bloc, il peut y avoir une étape intermédiaire qui utilise les signaux PSS/SSS pour se synchroniser au niveau temporel mais aussi au niveau fréquentiel. Cette étape supplémentaire peut servir à identifier les décalages Doppler par cellule et donc, dans cette situation la méthode n'a pas forcément besoin d'une base de données pour pouvoir compenser les décalages Doppler en fonction d'identifiants correspondant à une ou plusieurs cellules voisines. Cette nouvelle architecture sans faire appel à une base de données est plus simple mais aussi elle est autonome.

Au lieu de transmettre une liste des identifiants, sans sortir du cadre de l'invention, la station de base de desserte peut envoyer une consignes d'ajouter une cellule dans une liste ou d'effacer une cellule dans la liste, une par une ou encore plusieurs à la fois, de façon incrémentale.

Le procédé peut être mis en œuvre pour les modes FDD (Frequency Division Duplexing) ou mode TDD (Time Division Duplexing).

Le procédé peut aussi être mis en œuvre pour des mesures intra-fréquentielles, quand la station de base voisine dont on cherche à mesurer la fréquence, utilise une fréquence porteuse différente de celle de la cellule de desserte.

Le répéteur embarqué dans l'avion, peut être un point d'accès WiFi, un routeur Ethernet, un point d'accès pour une technologie non-3GPP comme le WiMax, FlashLink, et d'autres technologies mobiles telles que la technologie 3GPP, LTE, UMTS, HSDPA, le CDMA.

Le procédé et l'unité mobile UE selon l'invention permet notamment une mesure précise de la puissance en réception de stations de base voisines, en présence de décalages Doppler très importants liés à la mobilité à très grande vitesse, grâce à la mise en œuvre des signaux CRS avec une compensation Doppler adéquate. Le procédé peut être utilisé pour mesurer plusieurs cellules en même temps, car chaque CRS localement généré dans l'UE peut être individuellement corrigé avec le décalage Doppler de la cellule correspondante.

**Revendications**

1. Procédé pour estimer la puissance d'une cellule dans un système de communication utilisant la technologie LTE comportant au moins une station de desserte et une ou plusieurs stations voisines eNB, une ou plusieurs unités de communication mobiles, une unité de communication se déplaçant avec une vitesse élevée et étant en communication à un instant avec la station de desserte, comportant au moins les étapes suivantes :

   • Pour un signal reçu $r_1$ composé d'un signal $r(eNB_1)$ émis par une cellule de desserte $eNB_1$ et d'un signal $r(eNB_2)$ émis par au moins une cellule voisine $eNB_2$,
   • Transmettre le signal $r_1$ à une unité de compensation (602) et appliquer une première valeur de consigne de compensation correspondant au décalage Doppler sur le signal émis par la cellule de desserte, un deuxième signal $r_2$, $R_2$ issu de l'unité de compensation , $-fd_{DL,S'}$ (602) étant constitué d'un premier signal compensé $r(eNB_1)comp$, et au moins du signal $r(eNB_2)comp$ réceptionné depuis au moins la cellule voisine $eNB_2$,
   • Transmettre le deuxième signal $r_2$, $R_2$ à:

      o Un premier module de combinaison de signaux (651) qui reçoit le deuxième signal $r_2$, $R_2$ et une première séquence $c^*(eNB_1)$, $C^*(eNB_1)$, de signaux de référence spécifique à la cellule de desserte,
      ◦ Au moins un deuxième module de combinaison de signaux (652) qui reçoit le deuxième signal $r_2$, $R_2$, ladite deuxième séquence $c^*(eNB_2)comp$, $C^*(eNB_2)comp$ de signaux de référence issus d'une unité de compensation de signaux de référence (609, 809), Le procédé étant **caractérisé en ce qu'**il comprend : l'application simultanée d'une valeur de consigne pour la correction du décalage fréquentiel sur les signaux de référence spécifiques d'une cellule voisine de la cellule de desserte, après que la correction de la cellule de desserte soit faite: $-fd_{DL,S} + fd_{DL,N} = - \frac{v.F_{DL}}{c}.cos(\alpha) + \frac{v.F_{DL}}{c}.cos(\alpha')v$: le module du vecteur vitesse de l'UE, $F_{DL}$ la fréquence porteuse en voie descendante,

         $\alpha$: l'angle entre la direction de déplacement de l'UE et la direction du vecteur unitaire directeur de l'axe équipement mobile UE-cellule de desserte S,
         $\alpha'$: l'angle entre la direction de déplacement de l'UE et la direction du vecteur unitaire directeur de l'axe UE-cellule voisine N, noté

      $\vec{u'}$,

   • Déterminer une première valeur de puissance $P_1(eNB_1)$ correspondant au premier signal $M_1(r_2, c^*(eNB_1))$, $M_1(R_2, C^*(eNB_1))$ issu du premier module de combinaison de signaux correspondant à la cellule de base de desserte,
   • Déterminer une deuxième valeur de puissance $P_2(eNB_2)$ correspondant au deuxième signal $M_2(r_2, c^*(eNB_2)comp)$, $M_2(R_2, C^*(eNB_2)comp)$ issu du deuxième module de combinaison de signaux correspondant à au moins une cellule voisine,
   • Comparer la première valeur de puissance à au moins la deuxième valeur de puissance et sélectionner la meilleure cellule voisine pour une procédure de Handover et/ou décider d'une étape de Handover.

2. Procédé selon la revendication 1 **caractérisé en ce que** le premier module de combinaison de signaux et le deuxième module de combinaison de signaux sont un corrélateur et/ou un multiplicateur de signaux.

3. Procédé selon l'une des revendications 1 ou 2 **caractérisé en ce que** l'étape de comparaison des valeurs des puissances est réalisée au niveau de la station de base ou transmise à la station de base qui décide de déclencher ou non le Handover.

**4.** Procédé selon l'une des revendications précédentes **caractérisé en ce que** l'on génère les signaux de référence spécifiques pour une cellule voisine et on corrige l'effet Doppler sur ces signaux au niveau de la pile protocolaire de l'équipement mobile.

**5.** Procédé selon l'une des revendications précédentes **caractérisé en ce que** l'on génère les signaux de référence spécifiques pour une cellule voisine, un troisième bloc de multiplexage ou de corrélation reçoit le signal $r_2$ et une séquence de signaux CRS générée par le module externe et compensée, le mélange $M_3(r_2, c*(eNB_2)comp)$ est transmis à un module d'estimation de puissance (810), la valeur de puissance $P_3(eNB_2)$ est calculée et envoyée vers la couche RRC du mobile et on corrige l'effet Doppler au niveau d'une unité de génération de signaux de référence spécifiques externes à la pile protocolaire de l'unité mobile, et on conserve le signal issu de l'unité de génération externe lorsqu'il existe un signal issu de la pile protocolaire.

**6.** Procédé selon l'une des revendications 1 à 5 **caractérisé en ce que** l'on détermine les consignes de compensation Doppler pour une cellule de desserte S avec laquelle l'UE communique en exécutant les étapes suivantes :

  ○ Les consignes à appliquer en voie UL et DL sont notées respectivement $-fd_{UL,S}$ et $-fd_{DL,S}$,
  ○ Les décalages Doppler subis par le signal en voie montante et descendante, respectivement sont :

$$fd_{UL,S} = \frac{v.F_{UL}}{c}.cos(\alpha) \text{ et } fd_{DL,S} = \frac{v.F_{DL}}{c}.cos(\alpha) \,,$$

les consignes $-fd_{UL,S}$ et $-fd_{DL,S}$ permettant de compenser ces décalages avec :

  v : le module du vecteur vitesse de l'UE,
  $\alpha$: l'angle entre la direction de déplacement de l'UE et la direction du vecteur unitaire directeur de l'axe équipement mobile UE-cellule de desserte S.

**7.** Procédé selon l'une des revendications précédentes **caractérisé en ce que** le décalage fréquentiel à appliquer aux signaux CRS générés localement par l'équipement mobile avant de mesurer la puissance d'une cellule voisine N est déterminé de la manière suivante :
  ○ Le décalage Doppler par rapport à la cellule voisine noté $fd_{DL,N}$ est calculé de la manière suivante :

  ▪ $fd_{DL,N\_plus\_probable} = \dfrac{v.F_{DL\_cellule\_N\_plus\_probable}}{c}.cos\left(\alpha'cellule\_plus\_probable\right),$ où
  $\alpha'cellule\_plus\_probable$ est l'angle entre le vecteur unitaire $\vec{v}$ et la direction du vecteur unitaire directeur de l'axe UE-cellule voisine N la plus probable à être utilisée pour le handover dans la direction de déplacement en ayant un meilleur signal reçu ou alternativement le Doppler relatif maximal par rapport à la cellule de desserte,

  ▪ $fd_{DL,N} = \dfrac{v.F_{DL}}{c},$ où on fixe comme cellule cible pour le HO une cellule lointaine dans la direction de déplacement visible ou mesurable.

**8.** Procédé selon l'une des revendications précédentes **caractérisé en ce que** le calcul de la puissance prend en compte le signal $r_2$, $R_2$ reçu décalé temporellement sur la durée d'un symbole dans un intervalle de temps défini par le nombre des échantillons par préfixe cyclique et le nombre des échantillons par symbole utile.

**9.** Procédé selon l'une des revendications précédentes **caractérisé en ce que** le calcul de la valeur de la puissance utilise une corrélation du signal reçu en domaine temporel avec un modèle généré à partir d'une séquence CRS connue en avance par le récepteur de l'équipement mobile UE, et localement généré par le récepteur d'un équipement mobile, avec une structure OFDM spécifique LTE contenant seulement des pilotes sans des données utiles pour utilisateur, et avec la formule :

$$\hat{P}_{eNB2} = \max_{0 \leq \tau \leq N_{FFT}+N_{CP}-1} \left( \left| \frac{1}{N} \sum_{n=0}^{N-1} r_2[n+\tau] \cdot c^*_{eNB2,comp}[n] \right| \right)^2$$

où $\hat{P}_{eNB2}$ est la puissance estimée, $r_2$ le signal reçu dans le domaine temporel, $c^*_{eNB2,comp}[n]$ les valeurs complexes conjuguées de la séquence CRS, séquence qui a été localement régénérée et compensée par l'équipement mobile en fonction du Doppler relatif, et qui correspond aux valeurs complexes non-conjuguées $c_{eNB2}[n]$.

**10.** Procédé selon l'une des revendications 1 à 8 **caractérisé en ce que** le calcul de la puissance est effectué après une opération de transformée de Fourier FFT côté récepteur de l'équipement, grâce à l'équation suivante :

$$\hat{P}_{eNB2} = \left| \frac{1}{N_{RS}} \sum_{n=0}^{N_{RS}-1} R_2[n] \cdot C^*_{eNB2,comp}[n] \right|^2$$

où $\hat{P}_{eNB2}$ est la puissance estimée, $R_2[n]$ est le signal reçu après une opération de transformée de Fourier FFT du côté récepteur et la récupération des positions relatives aux pilotes et $C^*_{eNB2,comp}[n]$ sont les valeurs complexes conjuguées de la séquence CRS, séquence qui a été localement régénérée et compensée par l'UE en fonction du Doppler relatif, et qui correspond aux pilotes non-conjugués transmis $C_{eNB2}[n]$ par la station de base.

**11.** Procédé selon l'une des revendications précédentes **caractérisé en ce que** l'on calcule les décalages Doppler à appliquer en utilisant des informations de position données par un système GPS.

**12.** Procédé selon l'une des revendications 1 à 10 **caractérisé en ce que** les signaux utilisés dans le système comportent des séquences de synchronisation PSS/SSS et **en ce que** les décalages Doppler à appliquer sont déduits de ces signaux PSS/SSS.

**13.** Unité mobile UE permettant de mesurer la puissance d'une cellule de desserte dans un système de communication utilisant la technologie LTE et comportant au moins une ou plusieurs stations eNB, une ou plusieurs unités de communication mobiles se déplaçant avec une vitesse élevée, une station de desserte et au moins une station voisine **caractérisé en ce que** l'unité mobile UE comporte au moins les éléments suivants :

• Un émetteur/récepteur RF, (601a, 601b),
• Une unité de compensation Doppler en réception (602) - voie DownLink (DL) - depuis la cellule de desserte vers le UE pour calculer une première valeur de consigne $-fd_{DL, S}$ de correction Doppler de la cellule de desserte,
• Une unité de gestion de la mobilité (605) adaptée à déterminer les valeurs des consignes de décalage Doppler, et à déterminer simultanément et avant la mesure de puissance une valeur de consigne pour la correction du décalage fréquentiel sur les signaux de référence spécifiques d'une cellule voisine de la cellule de desserte , après que la correction de la cellule de desserte soit faite:

$$-fd_{DL,S} + fd_{DL,N} = -\frac{v.F_{DL}}{c}.cos(\alpha) + \frac{v.F_{DL}}{c}.cos(\alpha')v :$$ le module du vecteur vitesse de l'UE,

$F_{DL}$ la fréquence porteuse en voie descendante,

$\alpha$: l'angle entre la direction de déplacement de l'UE et la direction du vecteur unitaire directeur de l'axe équipement mobile UE-cellule de desserte S,
$\alpha'$: l'angle entre la direction de déplacement de l'UE et la direction du vecteur unitaire directeur de l'axe UE-cellule voisine N, noté $\vec{u}$',

• Un module de génération de signaux CRS (609) pour la cellule de desserte et pour une (ou plusieurs) cellule(s) voisine(s),
• Une unité d'estimation de puissance d'une cellule (610), adaptée à recevoir un premier signal correspondant à un signal mixé comprenant le signal reçu au niveau du récepteur de l'unité mobile corrigé pour la partie cellule de desserte de l'effet Doppler et d'une séquence de signaux CRS et au moins un deuxième signal correspondant au mélange du signal reçu par le récepteur de l'unité mobile mixé avec une deuxième séquence de signaux CRS corrigé par l'effet Doppler pour au moins une cellule voisine.

**14.** Unité mobile UE selon la revendication 13 **caractérisé en ce qu'**elle comporte un dispositif comprenant un module externe de génération de signaux CRS compensés, (809), un mélangeur (810) recevant le signal mesuré comprenant le signal compensé de la cellule de desserte et le signal non compensé de la cellule voisine, et une séquence de signaux CRS générée par ledit module externe pour la cellule voisine.

**15.** Unité mobile UE selon la revendication 13 **caractérisé en ce qu'**elle comporte un dispositif GPS fournissant la position, et/ou les coordonnées, et/ou des informations de vitesse de l'équipement mobile et en relation avec l'unité de gestion mobile pour déterminer les valeurs des consignes à appliquer.

**16.** Unité mobile UE selon la revendication 15 **caractérisé en ce qu'**elle comporte une base de données (604) contenant des informations relatives au déploiement du réseau de communication et en liaison avec l'unité de gestion de la mobilité.

## Patentansprüche

**1.** Verfahren zum Schätzen der Leistung einer Zelle in einem Kommunikationssystem, das LTE-Technologie nutzt, umfassend mindestens eine Versorgungsstation und eine oder mehrere benachbarte eNB-Stationen, eine oder mehrere mobile Kommunikationseinheiten, eine Kommunikationseinheit, die sich mit einer erhöhten Geschwindigkeit bewegt und zu einem Zeitpunkt mit der Versorgungsstation in Kommunikation ist, das mindestens die folgenden Schritte beinhaltet:

- für ein Empfangssignal $r_1$ bestehend aus einem von einer Versorgungszelle $eNB_1$ gesendeten Signal $r(eNB_1)$ und einem von mindestens einer Nachbarzelle $eNB_2$ gesendeten Signal,
- Übertragen des Signals $r_1$ zu einer Kompensationseinheit (602) und Anwenden eines ersten Kompensationssollwertes entsprechend dem Doppler-Versatz auf das von der Versorgungszelle gesendete Signal, wobei ein zweites Signal $r_2$, $R_2$ von der Kompensationseinheit $-fd_{DL,S'}$ (602) aus einem ersten kompensierten Signal $r(eNB_1)comp$ und mindestens dem von mindestens der Nachbarzelle $eNB_2$ empfangenen Signal $r(eNB_2)comp$ besteht,
- Übertragen des zweiten Signals $r_2$, $R_2$ zu:

  ○ einem ersten Signalkombinationsmodul (651), das das zweite Signal $r_2$, $R_2$ und eine erste Folge $c^*(eNB_1)$, $C^*(eNB_1)$ von für die Versorgungszelle spezifischen Referenzsignalen empfängt,
  ○ mindestens ein zweites Signalkombinationsmodul (652), das das zweite Signal $r_2$, $R_2$, die zweite Folge $c^*(eNB_2)comp$, $C^*(eNB_2)comp$ von Referenzsignalen von einer Referenzsignalkompensationseinheit (609, 809) empfängt,
  wobei das Verfahren **dadurch gekennzeichnet ist, dass** es Folgendes beinhaltet:
  gleichzeitiges Anwenden eines Sollwertes für die Korrektur des Frequenzversatzes auf die spezifischen Referenzsignale einer Nachbarzelle der Versorgungszelle, nach dem Vornehmen der Korrektur der Versorgungszelle:
  $$-fd_{DL,S} + fd_{DL,N} = -\frac{v.F_{DL}}{c}.cos(\alpha) + \frac{v.F_{DL}}{c}.cos(\alpha')v$$
  das Modul des Geschwindigkeitsvektors des UE, $F_{DL}$ die Trägerfrequenz auf dem Downlink-Kanal, $\alpha$ der Winkel zwischen der Bewegungsrichtung des UE und der Richtung des Leiteinheitsvektors der Achse Mobilgerät UE - Versorgungszelle S, $\alpha'$ der Winkel zwischen der Bewegungsrichtung des UE und der Richtung des Leiteinheitsvektors der Achse UE - Nachbarzelle N, mit $\vec{u}$ bezeichnet,

- Bestimmen eines ersten Leistungswertes $P_1(eNB_1)$ entsprechend dem ersten Signal $M_1(r_2, c^*(eNB_1))$, $M_1(R_2, C^*(eNB_1))$ vom ersten Signalkombinationsmodul entsprechend der Versorgungsbasiszelle,
- Bestimmen eines zweiten Leistungsvektors $P_2(eNB_2)$ entsprechend dem zweiten Signal $M_2(r_2, c^*(eNB_2)comp)$, $M_2(R_2, C^*(eNB_2)comp)$ vom zweiten Signalkombinationsmodul entsprechend der mindestens einen Nachbarzelle,
- Vergleichen des ersten Leistungswertes mit mindestens dem zweiten Leistungswert und Auswählen der besten Nachbarzelle für eine Handover-Prozedur und/oder Beschließen eines Handover-Schrittes.

**2.** Verfahren nach Anspruch 1, **dadurch gekennzeichnet, dass** das erste Signalkombinationsmodul und das zweite Signalkombinationsmodul ein Signalkorrelator und/oder ein Signalmultiplikator sind.

**3.** Verfahren nach Anspruch 1 oder 2, **dadurch gekennzeichnet, dass** der Schritt des Vergleichens der Leistungswerte an der Basisstation durchgeführt oder auf die Basisstation übertragen wird, die entscheidet, ob ein Handover ausgelöst werden soll oder nicht.

4. Verfahren nach einem der vorherigen Ansprüche, **dadurch gekennzeichnet, dass** die spezifischen Referenzsignale für eine Nachbarzelle erzeugt werden und der Doppler-Effekt an diesen Signalen am Protokollstapel des Mobilgeräts korrigiert wird.

5. Verfahren nach einem der vorherigen Ansprüche, **dadurch gekennzeichnet, dass** die spezifischen Referenzsignale für eine Nachbarzelle erzeugt werden, ein dritter Multiplexier- oder Korrelationsblock das Signal $r_2$ und eine Folge von von dem externen Modul erzeugten und kompensierten CRS-Signalen empfängt, das Mischsignal $M_3(r_2,$ c*(eNB$_2$)comp) zu einem Leistungsschätzmodul (810) übertragen wird, der Leistungswert $P_3$(eNB$_2$) berechnet und zur RRC-Schicht des Mobilgeräts gesendet wird und der Doppler-Effekt an einer Erzeugungseinheit für spezifische Referenzsignale, die extern zum Protokollstapel der Mobileinheit sind, korrigiert wird und das Signal von der externen Erzeugungseinheit konserviert wird, wenn ein Signal von dem Protokollstapel existiert.

6. Verfahren nach einem der Ansprüche 1 bis 5, **dadurch gekennzeichnet, dass** die Doppler-Kompensationssollwerte für eine Versorgungszelle S bestimmt werden, mit der das UE unter Ausführung der folgenden Schritte kommuniziert:

   ◦ die auf dem UL- und DL-Kanal anzuwendenden Sollwerte werden jeweils mit $-fd_{UL,S}$ und $-fd_{DL,S}$ bezeichnet,
   ◦ die Doppler-Versätze, denen das Signal in der Uplink- und Downlink-Richtung unterliegt, sind jeweils:

   $$\boldsymbol{fd_{UL,S} = \frac{v.F_{UL}}{c}.cos(\alpha)} \text{ und } \boldsymbol{fd_{DL,S} = \frac{v.F_{DL}}{c}.cos(\alpha)},$$ wobei die Sollwerte $-fd_{UL,S}$ und $-fd_{DL,S}$ das Kompensieren dieser Versätze zulassen mit:

   v: dem Modul des Geschwindigkeitsvektors des UE,
   $\alpha$: dem Winkel zwischen der Bewegungsrichtung des UE und der Richtung des Leiteinheitsvektors der Achse Mobilgerät UE - Versorgungszelle S.

7. Verfahren nach einem der vorherigen Ansprüche, **dadurch gekennzeichnet, dass** der auf die lokal vom Mobilgerät erzeugten CRS-Signale anzuwendende Frequenzversatz vor dem Messen der Leistung einer Nachbarzelle N wie folgt bestimmt wird:
   ◦ Doppler-Versatz in Bezug auf die Nachbarzelle $fd_{DL,N}$ wird wie folgt berechnet:

   $$fd_{DL,N\_\text{Wahrscheinlich}} = \frac{v.F_{DL\_\text{Wahrscheinlichsten}\_N\_Zelle}}{c}.cos\big(\alpha'\text{Wahrscheinlichsten} - \text{zelle}\big),$$

   wobei
   **wahrscheinlichsten Wer**
   $\alpha$ Wahrscheinlichsten - zelle der Winkel zwischen dem Einheitsvektor $\vec{v}$ und der Richtung des Leiteinheitsvektors der Achse UE - Nachbarzelle N ist, der mit der höchsten Wahrscheinlichkeit für das Handover in der Bewegungsrichtung benutzt werden wird, wobei sie das beste Empfangssignal oder alternativ den maximalen relativen Doppler in Bezug auf die Versorgungszelle hat,

   ■ $$fd_{DL,N} = \frac{v.F_{DL}}{c},$$ worin als Zielzelle für das HO eine ferne Zelle in der Bewegungsrichtung, die sichtbar oder messbar ist, festgelegt wird.

8. Verfahren nach einem der vorherigen Ansprüche, **dadurch gekennzeichnet, dass** die Berechnung der Leistung das Empfangssignal $r_2$, $R_2$, zeitlich versetzt über die Dauer eines Symbols in einem Zeitintervall, das durch die Anzahl von Abtastungen pro zyklischem Präfix und die Anzahl von Abtastungen pro Nutzsymbol definiert ist, berücksichtigt.

9. Verfahren nach einem der vorherigen Ansprüche, **dadurch gekennzeichnet, dass** die Berechnung des Wertes der Leistung eine Korrelation des Empfangssignals in der Zeitdomäne mit einem Modell nutzt, das auf der Basis einer im Voraus bekannten CRS-Folge durch den Empfänger des Mobilgeräts UE erzeugt wird, und lokal durch den Empfänger eines Mobilgeräts erzeugt, mit einer spezifischen OFDM-Struktur LTE, die nur Pilotsignale ohne für den Benutzer nützlichen Daten enthält, und mit der folgenden Formel:

$$\hat{P}_{eNB2} = \max_{0 \le \tau \le N_{FFT} + N_{CP} - 1} \left( \left| \frac{1}{N} \sum_{n=0}^{N-1} r_2[n+\tau] \cdot c_{eNB2,comp}^*[n] \right| \right)^2$$

worin $\hat{P}_{eNB2}$ die geschätzte Leistung ist, $r_2$ das Empfangssignal in der Zeitdomäne ist, $C_{eNB2,comp}^*[n]$ die konjugierten komplexen Werte der CRS-Folge sind, die lokal von dem Mobilgerät in Abhängigkeit vom relativen Doppler regeneriert und kompensiert wird und den komplexen nichtkonjugierten Werten $C_{eNB2}[n]$ entspricht.

10. Verfahren nach einem der Ansprüche 1 bis 8, **dadurch gekennzeichnet, dass** die Berechnung der Leistung nach einer Fourier-Transformationsoperation FFT auf der Empfängerseite des Geräts mit der folgenden Gleichung erfolgt:

$$\hat{P}_{eNB2} = \left| \frac{1}{N_{RS}} \sum_{n=0}^{N_{RS}-1} R_2[n] \cdot C_{eNB2,comp}^*[n] \right|^2$$

wobei $\hat{P}_{eNB2}$ die geschätzte Leistung ist, $R_2[n]$ das nach einer Fourier-Transformationsoperation FFT empfangene Signal auf der Empfängerseite und der Wiederherstellung der Positionen relativ zu den Pilotsignalen ist und $C_{eNB2,comp}^*[n]$ die komplexen konjugierten Werte der CRS-Folge sind, die lokal durch das UE in Abhängigkeit vom relativen Doppler regeneriert und kompensiert wurde und das den von der Basisstation übertragenen nicht-konjugierten Pilotsignalen $C_{eNB2}[n]$ entspricht.

11. Verfahren nach einem der vorherigen Ansprüche, **dadurch gekennzeichnet, dass** die anzuwendenden Doppler-Versätze unter Nutzung der von einem GPS-System gegebenen Positionsinformationen berechnet werden.

12. Verfahren nach einem der Ansprüche 1 bis 10, **dadurch gekennzeichnet, dass** die in dem System benutzten Signale PSS/SSS-Synchronisationsfolgen umfassen, und dadurch, dass die anzuwendenden Doppler-Versätze von diesen PSS/SSS-Signalen abgeleitet sind.

13. Mobileinheit UE, die das Messen der Leistung einer Versorgungszelle in einem Kommunikationssystem zulässt, das LTE-Technologie nutzt, und mindestens eine oder mehrere eNB-Stationen, wobei sich eine oder mehrere mobile Kommunikationseinheiten mit einer erhöhten Geschwindigkeit bewegen, eine Versorgungsstation und mindestens eine Nachbarstation umfasst, **dadurch gekennzeichnet, dass** die Mobileinheit UE mindestens die folgenden Elemente umfasst:

• einen RF-Sender/Empfänger (601a, 601b),
• eine Doppler-Kompensationseinheit beim Empfang (602) - Downlink-(DL)-Kanal - von der Versorgungszelle zum UE zum Berechnen eines ersten Sollwertes -$fd_{DL,S}$ der Doppler-Korrektur der Versorgungszelle,
• eine Einheit zum Verwalten der Mobilität (605), ausgelegt zum Bestimmen der Doppler-Versatzsollwerte und zum Bestimmen, gleichzeitig und vor der Leistungsmessung, eines Sollwertes für die Korrektur des Frequenzversatzes auf den spezifischen Referenzsignalen einer Nachbarzelle der Versorgungszelle nach dem Vorneh-

$$-fd_{DL,S} + fd_{DL,N} = - \frac{v.F_{DL}}{c} . cos(\alpha) + \frac{v.F_{DL}}{c} . cos(\alpha')v$$

men der Korrektur der Versorgungszelle:
das Modul des Geschwindigkeitsvektors des UE, $F_{DL}$ die Trägerfrequenz auf dem Downlink-Kanal, $\alpha$ der Winkel zwischen der Bewegungsrichtung des UE und der Richtung des Leiteinheitsvektors der Achse Mobilgerät UE - Versorgungszelle S, $\alpha'$ der Winkel zwischen der Bewegungsrichtung des UE und der Richtung des Leiteinheitsvektors der Achse UE - Nachbarzelle N, mit $\vec{u}$ bezeichnet,
• ein Modul zum Erzeugen von CRS-Signalen (609) für die Versorgungszelle und für eine oder mehrere Nachbarzellen,
• eine Einheit zum Schätzen der Leistung einer Zelle (610), ausgelegt zum Empfangen eines ersten Signals entsprechend einem Mischsignal, das das Empfangssignal am Empfänger der Mobileinheit, korrigiert für den Versorgungszellenteil des Doppler-Effekts, und eine CRS-Signalfolge umfasst, und mindestens eines zweiten Signals entsprechend der Mischung des Empfangssignals durch den Empfänger der Mobileinheit, gemischt mit einer zweiten CRS-Signalfolge, korrigiert um den Doppler-Effekt für mindestens eine Nachbarzelle.

**14.** Mobileinheit UE nach Anspruch 13, **dadurch gekennzeichnet, dass** sie Folgendes umfasst: ein Gerät, das ein externes Modul (809) zum Erzeugen von kompensierten CRS-Signalen umfasst, einen Mischer (810), der das gemessene Signal empfängt, das das kompensierte Signal der Versorgungszelle und das nicht kompensierte Signal der Nachbarzelle umfasst, und eine von dem externen Modul für die Nachbarzelle erzeugte CRS-Signalfolge.

**15.** Mobileinheit UE nach Anspruch 13, **dadurch gekennzeichnet, dass** sie ein GPS-Gerät umfasst, das die Position und/oder die Koordinaten und/oder die Geschwindigkeitsinformationen des Mobilgeräts liefert, und in Verbindung mit der mobilen Verwaltungseinheit zum Bestimmen der anzuwendenden Sollwerte.

**16.** Mobileinheit UE nach Anspruch 15, **dadurch gekennzeichnet, dass** sie eine Datenbank (604) umfasst, die Informationen über den Einsatz des Kommunikationsnetzes und in Verbindung mit der Mobilitätsverwaltungseinheit umfasst.

**Claims**

**1.** Method for estimating the power of a cell in a communication system using LTE technology comprising at least one service station and one or more adjacent stations eNB, one or more mobile communication units, a communication unit which moves at a high speed and which is in communication at a time with the service station, comprising at least the following steps:

• for a received signal $r_1$ composed of a signal $r(eNB_1)$ emitted by a service cell $eNB_1$ and a signal $r(eNB_2)$ transmitted by at least one adjacent cell $eNB_2$,
• transmitting the signal $r_1$ to a compensation unit (602) and applying a first compensation setpoint value corresponding to the Doppler frequency shift to the signal transmitted by the service cell, a second signal $r_2$, $R_2$ from the compensation unit, $-fd_{DL,S'}$ (602) comprised of a first compensated signal $r(eNB_1)comp$, and at least the signal $r(eNB_2)comp$ received from at least the adjacent cell $eNB_2$,
• transmitting the second signal $r_2$, $R_2$ to:

○ a first signal combination module (651) which receives the second signal $r_2$, $R_2$ and a first sequence $c^*(eNB_1)$, $C^*(eNB_1)$ of reference signals specific to the service cell,
○ at least a second signal combination module (652) which receives the second signal $r_2$, $R_2$, the second sequence $c^*(eNB_2)comp$, $C^*(eNB_2)comp$ of reference signals from a reference signal compensation unit (609, 809),

the method being **characterised in that** it comprises:
the simultaneous application of a setpoint value for the correction of the frequency offset on the specific reference signals of an adjacent cell of the service cell after the correction of the service cell is carried out:

$$-fd_{DL,S} + fd_{DL,N} = -\frac{v.F_{DL}}{c}.cos(\alpha) + \frac{v.F_{DL}}{c}.cos(\alpha')v:$$ the modulus of the speed vector of the UE, $F_{DL}$ the downstream carrier frequency,

α: the angle between the movement direction of the UE and the direction of the direction unit vector of the mobile equipment UE/service cell S axis,
a': the angle between the movement direction of the UE and the direction of the direction unit vector of the UE/adjacent cell N axis, designated $\vec{u'}$,

• determining a first power value $P_1(eNB_1)$ corresponding to the first signal $M_1(r2, c^*(eNB_1))$, $M_1(R_2, C^*(eNB_1))$ from the first signal combination module corresponding to the service base cell,
• determining a second power value $P_2(eNB_2)$ corresponding to the second signal $M_2(r_2, c^*(eNB_2)comp)$, $M_2(R_2, C^*(eNB_2)comp)$ from the second signal combination module corresponding to at least one adjacent cell,
• comparing the first power value to at least the second power value and selecting the best adjacent cell for a handover procedure and/or deciding a handover step.

**2.** Method according to claim 1, **characterised in that** the first signal combination module and the second signal combination module are a signal correlator and/or multiplier.

**3.** Method according to either claim 1 or 2, **characterised in that** the step of comparing the power values is carried out at the base station or transmitted to the base station which decides whether or not to initiate the handover.

4.  Method according to any one of the preceding claims, **characterised in that** the specific reference signals are generated for an adjacent cell and the Doppler effect is corrected on these signals at the protocol stack of the mobile equipment.

5.  Method according to any one of the preceding claims, **characterised in that** the specific reference signals are generated for an adjacent cell, a third multiplexing or correlation block receives the signal $r_2$ and a sequence of CRS signals generated by the external module and compensated for, the mixture $M_3(r_2, c^*(eNB_2)comp)$ is transmitted to a power estimation module (810), the power value $P_3(eNB_2)$ is calculated and sent to the RRC layer of the mobile and the Doppler effect is corrected at a specific reference signal generation unit external with respect to the protocol stack of the mobile unit, and the signal from the external generation unit is preserved when there is a signal issued from the protocol stack.

6.  Method according to any one of claims 1 to 5, **characterised in that** the setpoints for Doppler compensation are determined for a service cell S with which the UE communicates by carrying out the following steps:

    ◦ the setpoints to be applied at the UL and DL channel are designated $-fd_{UL,S}$ and $-fd_{DL,S}$, respectively,
    ◦ the Doppler shifts to which the signal is subjected in the upstream and downstream directions, respectively, are:

    ◦ $-fd_{UL,S} = \frac{v.F_{UL}}{c} . \cos(\alpha)$ $and$ $-fd_{DL,S} = \frac{v.F_{DL}}{c} . \cos(\alpha),$ the setpoints $-fd_{UL,S}$ and $-fd_{DL,S}$ enabling these offsets to be compensated for with:

    v: the modulus of the speed vector of the UE,
    $\alpha$: the angle between the movement direction of the UE and the direction of the direction unit vector of the mobile equipment UE/service cell S axis.

7.  Method according to any one of the preceding claims, **characterised in that** the frequency offset to be applied to the CRS signals generated locally by the mobile equipment before measuring the power of an adjacent cell N is determined in the following manner:

    ◦ the Doppler shift relative to the adjacent cell designated $fd_{DL,N}$ is calculated in the following manner:

    $$fd_{DL,N\_mostlikely} = \frac{v.F_{Dmostlikely\_cell\_N}}{c} . \cos(\alpha'mostlikely\_cell)$$ where

    $\alpha'mostlikely\_cell$ is the angle between the unit vector $\vec{v}$ and the direction of the direction unit vector of the UE/adjacent cell N axis most likely to be used for the handover in the movement direction, while having a better received signal or alternatively the maximum relative Doppler relating to the service cell,

    ▪ $$fd_{DL,N} = \frac{v.F_{DL}}{c}$$ where there is fixed as a target cell for the HO a remote cell in the movement direction which can be seen or measured.

8.  Method according to any one of the preceding claims, **characterised in that** the power calculation takes into account the received signal $r_2$, $R_2$ which is offset temporally over the duration of a symbol in a time range defined by the number of samples per cyclical prefix and the number of symbols per useful symbol.

9.  Method according to any one of the preceding claims, **characterised in that** the calculation of the power value uses a correlation of the signal received in the time domain with a model generated from a CRS sequence known in advance by the receiver of the mobile equipment UE and locally generated by the receiver of a mobile equipment item, with a specific OFDM structure LTE containing only pilots without useful data for the user and with the formula:

$$\hat{P}_{eNB2} = \max_{0 \le \tau \le N_{FFT} + N_{CP} - 1} \left( \left| \frac{1}{N} \sum_{n=0}^{N-1} r_2[n+\tau] \cdot c^*_{eNB2,comp}[n] \right| \right)^2$$

where $\hat{P}_{eNB2}$ is the estimated power, $r_2$ is the signal received in the time domain, $c^*_{eNB2,comp}[n]$ is the conjugated

complex values of the CRS sequence, which sequence has been locally regenerated and compensated for by the mobile equipment as a function of the relative Doppler, and which corresponds to the non-conjugated complex values $c_{eNB2}[n]$.

10. Method according to any one of claims 1 to 8, **characterised in that** the calculation of the power is carried out after a Fourier transformation operation FFT on the receiver side of the equipment with the following equation:

$$\hat{P}_{eNB2} = \left| \frac{1}{N_{RS}} \sum_{n=0}^{N_{RS}-1} R_2[n] \cdot C^*_{eNB2,comp}[n] \right|^2$$

where $\hat{P}_{eNB2}$ is the estimated power, $R_2[n]$ is the signal received after a Fourier transformation operation FFT on the receiver side and the recovery of the positions relating to the pilots and $C^*_{eNB2,comp}[n]$ are complex conjugated values of the CRS sequence, which sequence has been locally regenerated and compensated for by the UE as a function of the relative Doppler, and which corresponds to the non-conjugated pilots $C_{eNB2}[n]$ transmitted by the base station.

11. Method according to any one of the preceding claims, **characterised in that** the Doppler shifts to be applied are calculated by using position information provided by a GPS system.

12. Method according to any one of claims 1 to 10, **characterised in that** the signals used in the system comprise synchronisation sequences PSS/SSS and **in that** the Doppler shifts to be applied are derived from these PSS/SSS signals.

13. Mobile unit UE which enables the power of a service cell to be measured in a communication system using LTE technology and comprising at least one or more eNB stations, one or more mobile communication units which move at high speed, a service station and at least one adjacent station, **characterised in that** the mobile unit UE comprises at least the following elements:

   • an RF transmitter/receiver (601a, 601b),
   • a reception Doppler compensation unit (602) - DownLink (DL) channel - from the service cell to the UE in order to calculate a first setpoint value $-fd_{DL,S}$ of a Doppler correction of the service cell,
   • a mobility control unit (605) which is adapted for determining the Doppler shift setpoint values, and determining, at the same time as and before the power measurement, a setpoint value for the correction of the frequency offset on the specific reference signals of a cell adjacent to the service cell, after the correction of the service cell has been carried out: $-fd_{DL,S} + fd_{DL,N} = -\frac{v.F_{DL}}{c}.cos(\alpha) + \frac{v.F_{DL}}{c}.cos(\alpha')v$ $-fd_{DL,S}$ the speed vector modulus of the UE, $F_{DL}$ the carrier frequency in the downstream direction,

      $\alpha$: the angle between the movement direction of the UE and the direction of the direction unit vector of the movable equipment UE/service cell S axis,
      $\alpha'$: the angle between the movement direction of the UE and the direction of the direction unit vector of the UE/adjacent cell N axis, designated $\vec{u'}$,

   • a CRS signal generation module (609) for the service cell and for one (or more) adjacent cells,
   • a power estimation unit of a cell (610) which is suitable for receiving a first signal corresponding to a mixed signal comprising the signal received at the receiver of the mobile unit corrected for the service cell portion of the Doppler effect and a sequence of CRS signals and at least a second signal corresponding to the mixture of the signal received by the receiver of the mobile unit mixed with a second sequence of CRS signals corrected by the Doppler effect for at least one adjacent cell.

14. Mobile unit UE according to claim 13, **characterised in that** it comprises a device comprising an external compensated CRS signal generation module (809), a mixer (810) which receives the measured signal comprising the compensated signal of the service cell and the non-compensated signal of the adjacent cell, and a sequence of CRS signals generated by the external module for the adjacent cell.

15. Mobile unit UE according to claim 13, **characterised in that** it comprises a GPS device which provides the position and/or the coordinates and/or speed information of the mobile equipment and in relation to the mobile control unit in order to determine the setpoint values to be applied.

16. Mobile unit UE according to claim 15, **characterised in that** it comprises a database (604) containing information relating to the deployment of the communication network and in connection with the mobility control unit.

| | 1200km/h, 11km Altitude | 850km/h, 11km Altitude | 350km/h, 1km Altitude |
|---|---|---|---|
| $f_{D1}^{max}$ $=v*cos(\alpha)*f_{DL}/c$ | 2.4105 kHz | 1.7074 kHz | 0.7072563 kHz |
| $f_{D2}^{max}$ $=v*cos(\alpha)*f_{UL}/c$ | 2.2006 kHz | 1.5588 kHz | 0.6456853 kHz |
| $f_{D1}^{max}+f_{D2}^{max}$ | 4.6111 kHz | 3.2662 kHz | 1.3529 kHz |
| $f_{D1}^{max}-f_{D2}^{max}$ | 209.9 Hz | 148.6 Hz | 61.5710 Hz |
| $2 \times f_{D1}^{max}$ | 4.921 kHz | 3.4148 kHz | 1.4145 kHz |

1980 MHz < $f_{UL}$ <1995MHz          1980 MHz < $f_{DL}$ <1995MHz

## FIG.1

## FIG.2

FIG.3

FIG.4

FIG.5

FIG.6A

FIG.6B

EP 3 110 203 B1

FIG.6C

## FIG.7

| GTP-U | PDCP |
| UDP/IP | RLC |
| L2 | MAC (L2) |
| L1 | PHY (L1) |

Pile eNB₂ LTE

Récepteur/ Emetteur RF & CNA/CAN

S1-U

1001

1002

eNB₁

## FIG.8

| S1-AP | RRC (L3) |
| SCTP | PDCP |
| IP | RLC |
| L2 | MAC (L2) |
| L1 | PHY (L1) |

Pile eNB₂ LTE

Récepteur/ Emetteur RF & CNA/CAN

S1-MME

1001

1002

eNB₁

FIG.9

EP 3 110 203 B1

FIG.10

FIG.11

FIG.11

FIG.12A

FIG.12B

FIG.12C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2360967 A
- US 2006223559 A
- US 20130196670 A
- US 2005020203 A
- EP 2242312 A
- WO 2012171194 A

**Littérature non-brevet citée dans la description**

- **QI WANG ; MARKUS RUPP.** Analytical Link Performance Evaluation of LTE Downlink with Carrier Frequency Offset. *ASILOMAR,* 2011